(19) **Europäisches Patentamt / European Patent Office / Office européen des brevets**

(11) **EP 1 232 627 B1**

(12) **EUROPEAN PATENT SPECIFICATION**

(45) Date of publication and mention of the grant of the patent:
**01.07.2009 Bulletin 2009/27**

(51) Int Cl.:
**H04L 29/06** [(2006.01)]     **H04L 12/56** [(2006.01)]

(21) Application number: **00976194.1**

(22) Date of filing: **21.11.2000**

(86) International application number:
**PCT/GB2000/004410**

(87) International publication number:
**WO 2001/039467 (31.05.2001 Gazette 2001/22)**

(54) **METHOD AND SYSTEM FOR CONTROLLING TRANSMISSION OF PACKETS IN COMPUTER NETWORKS**

VERFAHREN UND SYSTEM ZUR STEUERUNG DER PAKETÜBERTRAGUNG IN COMPUTERNETZWERKEN

PROCEDE ET SYSTEME POUR REGULER LA TRANSMISSION DE PAQUETS DANS DES RESEAUX INFORMATIQUES

(84) Designated Contracting States:
**AT BE CH CY DE DK ES FI FR GB GR IE IT LI LU NL PT SE TR**

(30) Priority: **23.11.1999 US 448380**
**23.11.1999 US 448190**
**23.11.1999 US 448197**
**11.04.2000 US 547280**

(43) Date of publication of application:
**21.08.2002 Bulletin 2002/34**

(73) Proprietor: **International Business Machines Corporation**
**Armonk, NY 10504 (US)**

(72) Inventors:
- **AYDEMIR, Metin**
  **Durham, NC 27713 (US)**
- **BASS, Brian, Mitchell**
  **Apex, NC 27502 (US)**
- **JEFFRIES, Clark, Debs**
  **Durham, NC 27713-1441 (US)**
- **ROVNER, Sonia, Kiang**
  **Hursley P. Winchester Hampshire SO21 2JN (GB)**
- **SIEGEL, Michael, Steven**
  **Raleigh, NC 27615 (US)**
- **GALLO, Anthony, Matteo**
  **Apex, NC 27502 (US)**

- **GORTI, Brahmanand, Kumar**
  **Cary, NC 27513 (US)**
- **HEDDES, Marco**
  **Hursley P. Winchester Hampshire SO21 2JN (US)**

(74) Representative: **Ling, Christopher John**
**IBM United Kingdom Limited,**
**Intellectual Property Department,**
**Hursley Park**
**Winchester,**
**Hampshire SO21 2JN (GB)**

(56) References cited:
**WO-A-98/26628**

- **OHSAKI H ET AL: "ANALYSIS OF RATE-BASED CONGESTION CONTROL ALGORITHMS FOR ATM NETWORKS. PART 2: INITIAL TRANSIENT STATE ANALYSIS" SINGAPORE, NOV. 14 - 16, 1995,NEW YORK, IEEE,US, 14 November 1995 (1995-11-14), pages 1095-1101, XP000622960 ISBN: 0-7803-2510-9**
- **WU-CHANG FENG, DILIP D. KANDLUR, DEBANJAN SAHA, KANG G. SHIN: "BLUE: A New Class of Active Queue Management Algorithms" UNIVERSITY OF MICHIGAN ARTICLE, 30 April 1999 (1999-04-30), pages 1-27, XP002161812 Michigan**

EP 1 232 627 B1

**Description**

**FIELD OF THE INVENTION**

The present invention relates to computer networks, and more particularly to methods and systems for controlling discarding and, therefore, transmission of data in a computer network.

**BACKGROUND OF THE INVENTION**

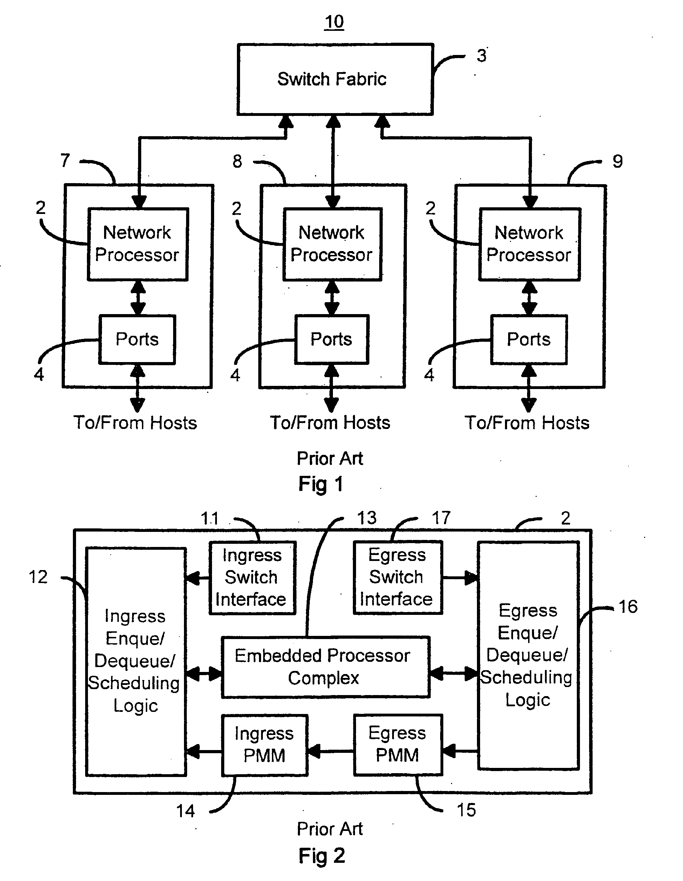

Computer networks are of increasing interest due to increasing usage of a variety of network applications, such as those involving the Internet. Switches are often used to couple portions of a network together or to couple networks. Figure 1 depicts a simplified block diagram of a switch 10 which may be used in a computer network. The switch 10 includes a switch fabric 3 coupled with blades 7, 8 and 9. Each blade 7, 8 and 9 is generally a circuit board and includes at least a network processor 2 coupled with ports 4. The ports 4 are coupled directly or indirectly through various network nodes with hosts (not shown). The blades 7, 8 and 9 can provide traffic to the switch fabric 3 and accept traffic from the switch fabric 3. Thus, any host connected with one of the blades 7, 8 or 9 can communicate with another host connected to the same or another blade 7, 8 or 9.

Figure 2 depicts a high-level block diagram of an embodiment of a programmable network processor useful as the network processor 2 shown in Figure 1. As there shown, the network processor 2 includes an ingress switch interface (ingress SWI) 11, an ingress enqueue/dequeue/scheduling logic (ingress EDS) 12, an embedded processor complex (EPC) 13, an ingress physical MAC multiplexer (ingress PMM) 14, and egress physical MAC multiplexer (egress PMM) 15, an egress enqueue/dequeue/scheduling logic (egress EDS) 16 and an egress switch interface (egress SWI) 17. The network processor 2 may also contain other storage and processing devices. The EPC 13 includes a number of protocol processors plus co-processors. The ingress EDS 12 and egress EDS 16 can perform certain enqueuing, dequeuing and scheduling functions for traffic travelling from devices, such as Ethernet devices, to the switch fabric and for traffic travelling from the switch fabric to the devices, respectively. The ingress SWI 11 and egress SWI 17 provide links for connecting to other devices, such as another network processor or switch (not shown in Figure 2). In use with a switch fabric, the ingress SWI 11 and egress SWI 17 are coupled with the switch fabric 3 (Figure 1) for the switch 10. The ingress PMM 14 and egress PMM 15 receive traffic from and transmit traffic to, respectively, physical layer devices. The architecture and operation of the programmable network processor here described are subject to protection apart from the inventions here disclosed. In some applications, the functions here described as being accomplished by the combination of a switch fabric with one or more network processors can be accomplished by a single network processor or a coupled pair of network processors apart from any provision of a switch fabric.

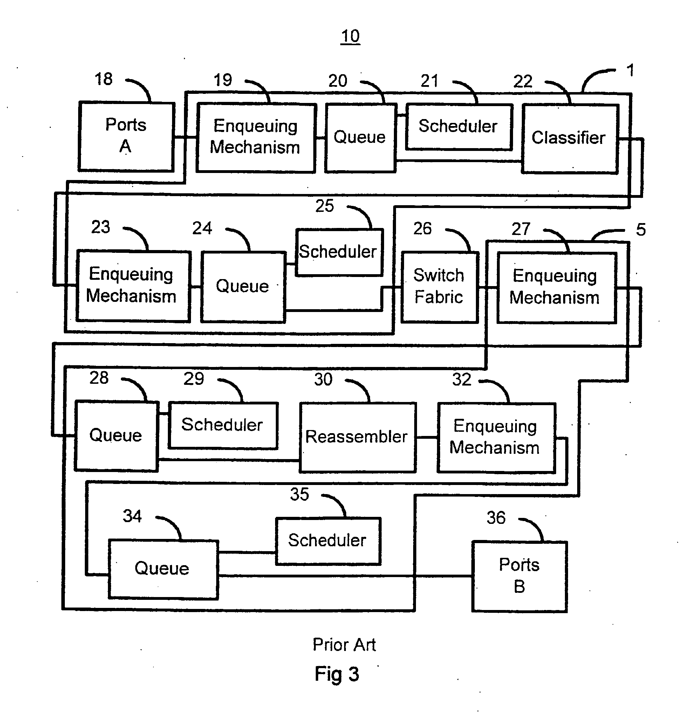

Figure 3 depicts an alternative simplified block diagram of the switch 10, differently illustrating some of the functions performed by network processors 2. Although some of the functions are performed by the same components as shown in Figure 1, these components may be labelled differently. For example, for the purposes of explaining the path of traffic through the switch 10, the switch fabric 3 of Figure 1 is depicted as switch fabric 26 in Figure 3. The switch 10 couples hosts (not shown) connected with ports A 18 with those hosts (not shown) connected with ports B 36. Thus, the switch 10 allows packets of data to be transferred from a source to a destination. Data packets could include a number of different types of data packets. For example, Ethernet packets (usually termed frames), ATM packets (usually termed cells) and IP packets (usually termed packets) will all be termed packets herein.

The switch 10 performs various functions including classification of data packets provided to the switch 10, transmission of data packets across the switch 10 and reassembly of packets. These functions are provided by the classifier 22, the switch fabric 26 and the reassembler 30, respectively. The classifier 22 classifies packets which are provided to it and breaks each packet up into convenient-sized portions, which are here termed cells. The switch fabric 26 is a matrix of connections through which the cells are transmitted on their way through the switch 10. The reassembler 30 reassembles the cells into the appropriate packets. The packets can then be provided to the appropriate port of the ports B 36, and output to the destination hosts. The classifier 19 may be part of one network processor 1, while the reassembler 30 may be part of another network processor 5. The portions of the network processor 1 and the network processor 5 depicted perform functions for traffic travelling from ports A 18 and to ports B 36, respectively. However, the network processors 1 and 5 also perform functions for traffic travelling from ports A 18 and to ports B 36, respectively. However, the network processors 1 and 5 also perform functions for traffic traveling from ports B 36 and to ports A 18, respectively. Thus, each network processor 1 and 5 can perform classification and reassembly functions. Furthermore, each network processor 1 and 5 can be a network processor as shown in Figures 1 and 2.

Due to bottlenecks in transferring traffic across the switch 10, data packets may be required to wait prior to execution of the classification, transmission and reassembly functions. As a result, queues 20, 24, 28 and 34 may be provided. Coupled to the queues 20, 24, 28 and 34 are enqueuing mechanisms 19, 23, 27 and 32. The enqueuing mechanisms place packets or cells into the corresponding queues and can provide a notification which is sent back to the host from which the packet originated. The classification, enqueuing, and scheduling functions are preferably provided by the ingress EDS 12 and egress EDS 16 in the network processor depicted in Figure 2. The enqueuing mechanisms 19 and 23, the queues 20 and 24, the classifier 22 and the schedulers 21 and 25 are controlled using the ingress EDS 12. Similarly, the enqueuing mechanisms 27 and 32, the queues 28 and 34, the reassembler 30 and the schedulers 29 and 35 are controlled using the egress EDS 16.

Also depicted in Figure 3 are schedulers 21, 25, 29 and 35. The schedulers control the scheduling of individual packets which are to leave the queues 20, 24, 28 and 34, respectively. In general and as will become more clear hereinafter, the concern of the present application is the egress portion of the network processor 2, depicted by egress PMM 15, egress EDS 16 and egress SWI 17 in Figure 2. One exemplary focus of the present invention includes the scheduler 35 which controls the traffic to ports B 36. For clarity, the function of schedulers is discussed with regard to the scheduler 35 and the queue 34. Typically, the scheduler 35 is provided with information relating to each packet in the queue 34. This information may include the type of the packet, such as a real-time packet for which time of transmission is important, or a data packet for which the speed of transmission is not important. Based on this information and other information provided to it, the scheduler 35 determines each individual packet in the queue 34 to be removed from the queue and sent on towards its destination. For example, the scheduler 35 may include one or more calendars, each including a number of positions, and a weighted fair queuing ring including another number of positions. The scheduler 35 may place certain packets in the calendar and other packets in the ring. The scheduler allocates a certain amount of time to each position in the calendar. Each position in the calendar can have a single packet, typically represented by an identifier, or can be empty. When the scheduler reaches a certain position, a packet placed at that position will be retrieved from the queue and sent toward its destination. If, however, the position in the calendar is empty, the scheduler 35 waits until a particular amount of time has passed, then moves to the next position in the calendar. Similarly, the scheduler 35 places other packets in positions of the weighted fair queuing ring of the scheduler 35. A position in the weighted fair queuing ring can also be either occupied by a single packet or empty. If the position is occupied, then the scheduler 35 sends the packet in the position upon reaching the position. If the position is unoccupied, the scheduler 35 skips to the next occupied position. By using the scheduler 35 to control individual packets leaving the queue 34, traffic can flow through the switch 10.

Although the queues 20, 24, 28 and 34 are depicted separately, one of ordinary skill in the art will readily realise that some or all of the queues may be part of the same physical memory resource.

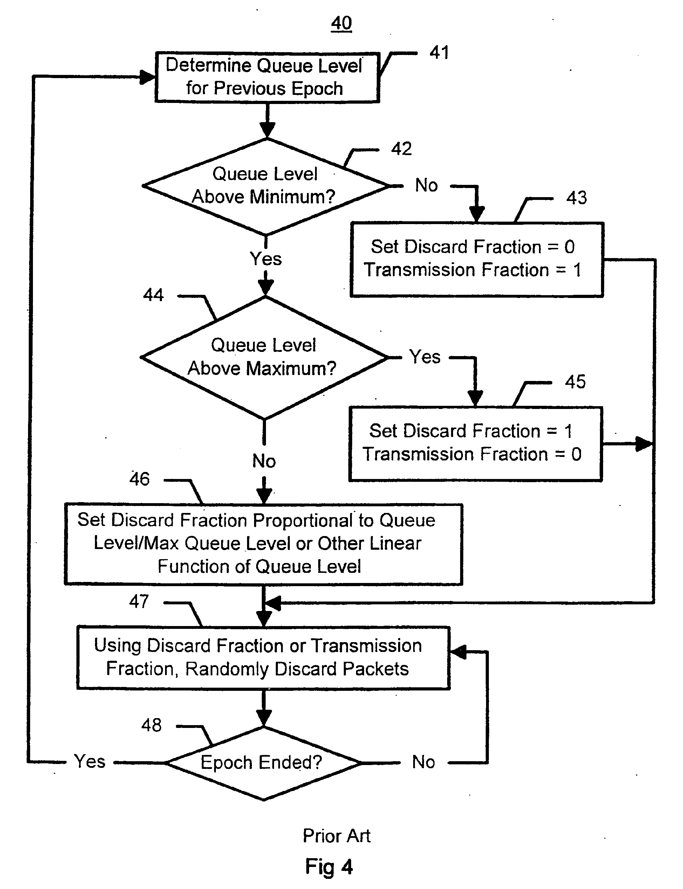

Methods have been developed in order to control traffic flowing through the switch 10, thereby improving performance of the network in which the switch is used. In particular, a method known as RED (random early discard or detection) may be used in an attempt to assure that the memory relevant memory resource, such as a queue, is not overloaded. Figure 4 depicts a method used in RED. Method RED is typically used by one of the enqueuing mechanisms 19, 23, 27, 32, to control the traffic through the corresponding queue 20, 24, 28, 34, respectively. For the purposes of clarity, method RED will be explained with reference to the enqueuing mechanism 19 and the queue 20.

At the end of a short period of time, known as an epoch, a queue level of the queue 20 for the epoch is determined by the enqueuing mechanism 19, via step 41. Note that the queue level determined could be an average queue level for the epoch. In addition, the queue level determined could be the total level for the memory resource of which the queue 20 is a part. It is then determined if the queue level is above a minimum threshold, via step 42. If the queue level is not above the minimum threshold, then a conventional transmission fraction is set to one, via step 43. Step 43 also sets a discard fraction to be zero. The transmission fraction determines the fraction of packets that will be transmitted in the next epoch. The discard fraction determines the fraction of packets that will be dropped. The conventional discard fraction is, therefore, equal to one minus the conventional transmission fraction. A transmission fraction of one thus indicates that all packets should be transmitted and none should be dropped.

If it is determined in step 42 that the queue level is above the minimum threshold, then it is next determined whether the queue level for the epoch is above a maximum threshold, via step 44. If the queue level is above the maximum threshold, then the conventional transmission fraction is set to zero and the conventional discard fraction set to one, via step 45. If the queue level is not above the maximum threshold, then the conventional discard fraction is set to be proportional to the queue level of the previous epoch divided by a maximum possible queue level or, alternatively, to some other linear function of the queue level, via step 46. Thus, the conventional discard fraction is proportional to the fraction of the queue 20 that is occupied or some other linear function of the queue level. In step 46, therefore, the conventional transmission fraction is also set to be proportional to one minus the conventional discard fraction.

The conventional transmission fraction and the conventional discard fraction set in step 43, 45 or 46 is then utilised for the next epoch to randomly discard packets, via step 47. Thus, when the queue level is below the minimum threshold, all packets will be transmitted by the enqueuing mechanism 19 to the queue 20 during the next epoch. When the queue level is above a maximum threshold, then all packets will be discarded by the enqueuing mechanism 19 during the next epoch or enqueued to a discard queue. When the queue level is between the minimum threshold and the maximum threshold, then the fraction of packets discarded by the enqueuing mechanism 19 is proportional to the fraction of the queue 20 that is occupied or some other linear function of the queue level. Thus, the higher the queue level, the higher the fraction of packets discarded. In addition, a notification may be provided to the sender of discarded packets, which causes the sender to suspend sending additional packets for a period of time.

The individual packets which are selected for discarding may also be randomly selected. For example, for each packet, the enqueuing mechanism 19 may generate a random number between zero and one. The random number is compared to the conventional discard fraction. If the random number is less than or equal to the conventional discard fraction, then the packet is dropped. Otherwise, the packet is transmitted to the queue 20. This process of discarding packets based on the transmission fraction is continued until it is determined that the epoch has ended, via step 48. When the epoch ends, method RED commences again in step 41 to determine the conventional transmission fraction for the next epoch and drop packets in accordance with the conventional transmission fraction during the next epoch.

Because packets can be discarded based on the queue level, method RED allows some control over the traffic through the switch 10. As a result, fewer packets may be dropped due to droptail than in a switch which does not have any mechanism for discarding packets before the queue 20 becomes full. Droptail occurs when packets must be dropped because a queue is full. As a result, there is no opportunity to account for the packet's priority in determining whether to drop the packet. Furthermore, in some situations, method RED can reduce the synchronisation of hosts sending packets to the switch 10. This occurs because packets may be dropped randomly, based on the conventional transmission fraction, rather than dropping all packets when the queue level is at or near the maximum queue level. Performance of the switch 10 is thus improved over a switch that does not utilise method RED, that is, a switch that simply drops next arriving packets when its buffer resources are depleted.

Although method RED improves the operation of the switch 10, one of skill in the art will readily realise that in many situations, the method may fail to adequately control traffic through the switch 10. Despite the fact that packets, or cells, may be dropped before the queue becomes full, the hosts tend to become synchronised in some situations. This is particularly true for moderate or higher levels of congestion of traffic in the switch 10. The conventional transmission fraction is based on the queue level. However, the queue level may not be indicative of the state of the switch. For example, a queue level below the minimum threshold could be due to a low level of traffic in the switch 10 (a low number of packets passing through the switch). However, a low queue level could also be due to a large number of discards in the previous epoch because of high traffic through the switch 10. If the low queue level is due to a low traffic level, increasing the conventional transmission fraction is appropriate. If the low queue level is due to a high discard fraction, increasing the conventional transmission fraction may be undesirable. Method RED does not distinguish between these situations. As a result, the transmission fraction may be increased when it should not be. When this occurs, the queue may become rapidly filled. The transmission fraction will then be dropped, and the queue level will decrease. When the queue level decreases, the transmission fraction will increase, and the queue may become filled again. The switch 10 thus begins to oscillate between having queues full and queues empty. As a result, the average usage of the switch 10 becomes quite low and the performance of the network using the switch 10 suffers.

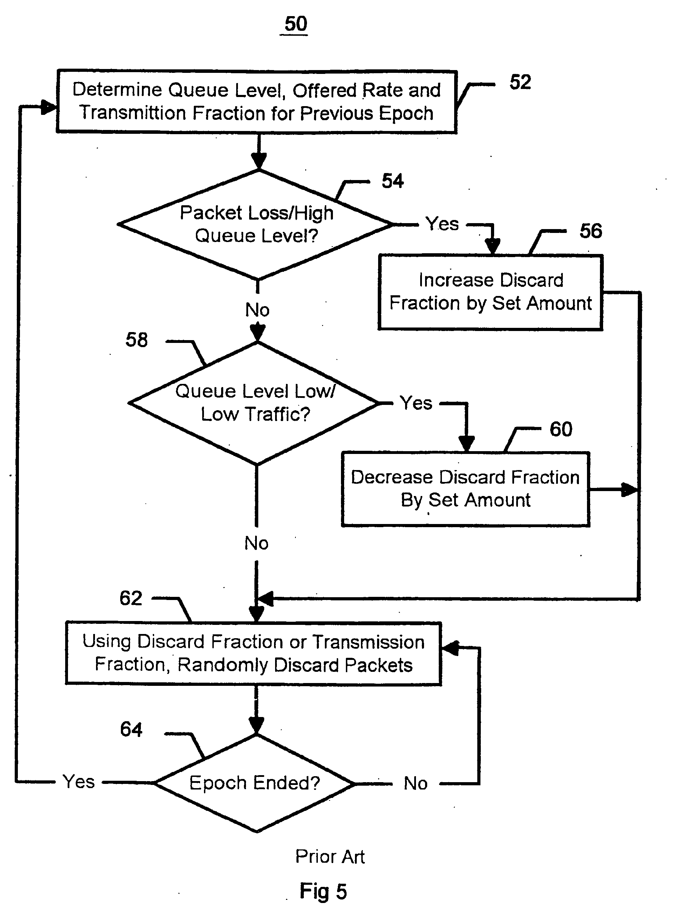

Figure 5 depicts a flow chart of a method more recently developed by employees of International Business Machines, Inc. of Armonk, New York. This method is known as BLUE. Method BLUE takes into account not only the queue level, but also the transmission rate and the offered rate. The offered rate is the rate at which packets or cells are offered to the enqueuing mechanism to be provided to the corresponding queue. As with method RED, method BLUE will be described using the enqueuing mechanism 19 and the queue 20. The queue level for the queue 20, the transmission fraction provided to the queue 20 by the enqueuing mechanism 19 and offered rate are determined for the epoch which just ended, via step 52. The offered rate is the rate at which packets are provided to the enqueuing mechanism 19. Thus, the offered rate could come from flows of traffic provided by one or more of the ports A 18.

It is then determined whether there is a packet loss or a queue level greater than some threshold, via step 54. Either event indicates that the discard fraction should be increased. If so, then the discard fraction is incremented by a first constant amount that may be empirically determined, via step 56. In step 56 the transmission fraction, which is one minus the discard fraction, is decreased. If it is determined in step 54 that the discard fraction should not be increased, then it is determined whether the discard fraction should be decreased, via step 58. The discard fraction should be decreased if the queue level is low or the offered rate is low. If the discard fraction should be decreased, then this is accomplished by subtracting a second constant amount that may also be empirically determined, via step 60. The discard fraction determined in step 56 or 60, if changed, or the old discard fraction is then used to determine the fraction of packets to be transmitted to the queue 20 during the next epoch, via step 62. In step 62 packets may be discarded randomly or by also taking into account each packet's priority. It is thus ensured that the correct discard fraction and, therefore, the correct transmission fraction are maintained. It is then determined whether the epoch has ended, via step 64. If so, step S2 is returned to. Otherwise, method BLUE repeats commencing at step 62. For further details on BLUE, the interested reader may consult the website at http://www.eecs.umich.edu/usuchang/blue/.

Although method BLUE works well for its intended purpose and is an improvement over method RED, one of skill in the art will readily realise that method BLUE may take a relatively long time to reach a stable state. Thus, although performance is improved over method RED, performance of the network may still be poorer than what is desired.

Ohsaki H et al: "Analysis of rate-based congestion control algorithm for ATM networks. part 2: initial transient state analysts", pages 1095-1101 discloses a system in which the allowed cell rate is adjusted by as empirically determined, constant amount based on the queue level and the offered rate.

Another method for controlling traffic across a switch provides customers with different services based, for example, on the price paid by a consumer for service. A consumer may wish to pay more to ensure a faster response or to ensure that the traffic for the customer will be transmitter even then traffic for other customers is dropped due to congestion. Thus, the concept of differentiated services has been developed. Differentiated services can provide different levels of service, or flows of traffic through the networks, for different customers.

DiffServ is an emerging Internee Engineering Task Force (IETF) standard for providing differentiated services (see IETF RFC 2475 and related RFCs). DiffServ is based on behaviour aggregate flows. A behaviour aggregate flow can be viewed as a pipeline from one edge of the network to another edge of the network. Within each behaviour aggregate flow, there could be hundreds of sessions between individual hosts. However, Diffserv is unconcerned with sessions within a behaviour aggregate flow. Instead, DiffServ is concerned with allocation of bandwidth between the behaviour aggregate flows. According to DiffServ, excess bandwidth is to be allocated fairly between behaviour aggregate flows. Furthermore, DiffServ provides criteria, discussed below, for Measuring the level of service provided to each behaviour aggregate flow.

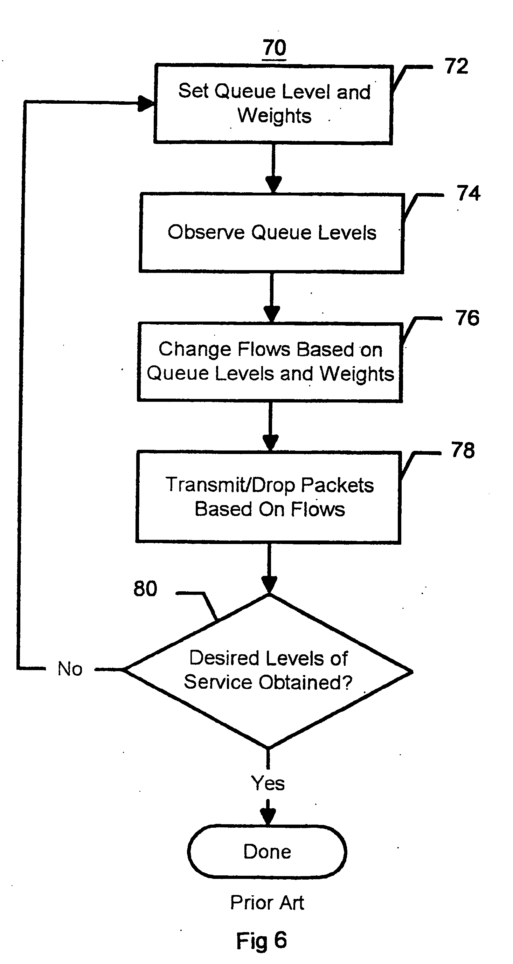

One mechanism for providing different levels of services utilises a combination of weights and a queue level to provide different levels of services. Figure 6 depicts such a method. The queue level thresholds and weights are set, via step 72. Typically, the queue level thresholds are set in step 72 by a network administrator. The weights can be set for different pipes, or flows, through a particular queue, switch 10 or network processor 1 or 5. Thus, the weights are typically set for different behaviour aggregate flows. The instantaneous queue levels, averaged queue levels, instantaneous pipe flow rates, or averaged pipe flow rates are observed, typically at the end of a period of time known as an epoch, via step 74. The flows for the pipes are then changed based on how the queue level compares to the queue level threshold and on the weights, via step 76. Flows for pipes having a higher weight undergo a greater change in step 76. The queue value or pipe flow rate for a pipe determines what fraction of traffic offered to a queue, such as the queue 34, by the pipe will be transmitted to the queue 34 by the corresponding enqueuing mechanism, such as the enqueuing mechanism 32. Traffic is thus transmitted to the queue or dropped based on the flows, via step 78. A network administrator then determines whether the desired levels of service are being met, via step 80. If so, the network administrator has completed his or her task. However, if the desired level of service is not achieved, then the queue level or pipe flow level thresholds and, possibly, the weights are reset, via step 72 and the method repeats.

Although the DiffServ method here described functions, one of skill in the art will readily realise that it is difficult to determine what effect changing the queue level thresholds will have on particular pipes through the network. Thus, the network administrator using the method may have to engage in a great deal of experimentation before reaching the desired flow rate for different customers, or pipes (behaviour aggregate flows) in a computer.

Furthermore, the method indirectly operates on parameters that are typically used to measure the quality of service. Queue levels are not a direct measure of criteria typically used for service. Typically, for example in DiffServ (see IETF RFC 2475 and related RFCs), levels of service are measured by four parameters: drop rate, bandwidth, latency and jitter. The drop rate is the percentage of traffic that is dropped as it flows across a switch. The bandwidth of a behaviour aggregate flow is a measure of the amount of traffic for the behaviour aggregate flow which crosses the switch and reaches its destination. Latency is the delay incurred in sending traffic across the network. Jitter is the variation of latency with time. The queue levels are not considered to be a direct measure of quality of service. Thus, the method does not directly address any of the criteria for quality of service, making it more difficult for a network administrator to utilise the method for providing different levels of service.

Even when using method RED or method BLUE, a scheduler such as the scheduler 35 may be provided with a larger amount of work than can be accomplished in a given time. In particular, if too many packets are desired to be removed from the queue 34 in a particular amount of time, the scheduler may be unable to cope with the traffic through the switch 10. For example, the scheduler 35 may be capable of ensuring that packets removed from the queue 34 are forwarded toward their final destination, such as a target port, at a first rate. The first rate may be limited by a variety of factors, such as the ability of the target port to accept traffic. Methods RED and BLUE may allow packets to be removed from the queue at a second rate. If the second rate is larger than the first rate, then packets begin to back up in the scheduler 35. For example, if the scheduler 35 includes a calendar and a weighted fair queuing ring, then all of the positions in the calendar and the weighted fair queuing ring can eventually become occupied. The packets will thus be stalled from leaving the queue 34 until a position in the calendar or the weighted fair queuing ring in the scheduler 35 becomes open. As a result, the latency for packets travelling through the switch 10 will increase, traffic will be slowed, and the switch 10 will not function as efficiently as desired.

With the above discussion in mind, it will be understood by persons of skill in the applicable arts that systems and methods are needed which better control traffic through a switch. The present invention addresses such needs.

## SUMMARY OF THE INVENTION

The present invention provides methods, apparatus and computer readable media which enable controlling a flow of a plurality of packets in a computer network. The computer network includes a queue. The methods and apparatus comprise determining a queue level for the queue and determining an offered rate of the plurality of packets to the queue. The methods and apparatus also comprise controlling a transmission fraction of the plurality of packets to the queue, based on the queue level and the offered rate, so that the transmission fraction and the queue level are critically damped (as herein defined) if the queue level is between at least a first queue level and a second queue level.

According to the methods, apparatus and media disclosed herein, the present invention provides mechanisms for providing a transmission fraction and, therefore, dropping packets so that the computer network is not only stable but reaches equilibrium rapidly.

## BRIEF DESCRIPTION OF THE DRAWINGS

Figure 1 is a simplified block diagram of a switch useful in a computer network.
Figure 2 is a simplified block diagram of a programmable network processor useful in a computer network and capable of functioning as a switch in certain applications.
Figure 3 is an alternative simplified block diagram of a switch useful in a computer network.
Figure 4 is a flow chart depicting method RED for controlling traffic through a switch.
Figure 5 is a flow chart depicting method BLUE for controlling traffic through a switch.
Figure 6 is a flow chart depicting a DiffServ method for controlling traffic through a switch.
Figure 7 is a simplified flow chart depicting certain characteristics of a method in accordance with the present invention for controlling traffic through a switch such as in Figures 1 through 3.
Figure 8 is a simplified flow chart of an implementation of the method of Figure 7.
Figure 9 is a view similar to Figure 7 depicting characteristics of another method in accordance with the present invention.
Figure 10 is a simplified flow chart of certain method steps useful in the method of Figure 9.
Figure 11 is a simplified flow chart of an implementation of the method of Figure 9.
Figure 12 is a view similar to Figures 7 and 9 depicting characteristics of another method in accordance with the present invention.
Figure 13 is a simplified flow chart of an implementation of the method of Figure 12.
Figure 14 is a simplified flow chart of another implementation of the method of Figure 12.
Figures 15 and 16 are to be taken together as a simplified flow chart of another implementation of the method of this invention.
Figure 17 is a simplified flow chart of certain method steps useful in the method of Figures 15 and 16.
Figure 18 is a simplified flow chart of certain method steps useful in the method of Figures 15 and 16.
Figure 19 is a schematic representation of a scheduler present in the switches of Figures 1 through 3.
Figure 20 is a flow chart of certain method steps useful in methods in accordance with this invention and exercising the scheduler of Figure 19.
Figure 21 is a flow chart of certain method steps useful in methods in accordance with this invention and exercising the scheduler of Figure 19.

## DETAILED DESCRIPTION OF THE INVENTION

The present invention relates to improvements in the control of traffic in computer networks. The following description is presented to enable one of skill in the applicable arts to make and use the various embodiments of the invention and is provided in the context of a patent application and its requirements. Various modifications to the preferred embodiments will be readily apparent to those skilled in the art and the generic principles herein may be applied to other embodiments. Thus, the present invention is not intended to be limited to the embodiments shown, but is to be accorded the widest scope consistent with the principles and features described herein.

Switches used in computer networks typically contain queues, which may be logical queues part of the same memory resource or be separate memory resources, in which packets or smaller sized pieces of the packets, called cells, are temporarily placed. The enqueuing mechanisms which place the packets into queues may also have a mechanism for discarding packets in order to control traffic through the switch and improve operation of the network. For example, random early discard or detection (RED), described above in the method of Figure 4, discards certain packets based on the queue level. Although RED functions in certain situations, in many networks RED fails to improve network performance. For example, networks in which the switches have a moderate or high traffic amount of traffic will still be subject to oscillations. Thus, such networks may carry only a very small amount of traffic in comparison to the capacity for which such networks were designed.

The present invention provides methods, apparatus and media bearing instructions for controlling a flow of a plurality of packets in a computer network. The computer network includes a queue. The methods, apparatus and media comprise determining a queue level for the queue and determining an offered rate of the plurality of packets to the queue. They also comprise controlling a transmission fraction of the plurality of packets to the queue. The transmission fraction is controlled based on the queue level and the offered rate so that the transmission fraction and the queue level are critically damped if the queue level is between at least a first queue level and a second queue level.

The present invention will be described in terms of particular systems and particular components. However, one of skill in the art will readily recognise that these methods and systems will operate effectively for other components in a computer network. The present invention will also be described in the context of a queue. However, one of skill in the art will readily recognise that the present invention functions effectively when queues are logical queues within a single memory resource or when the queues are part of separate memory resources. The present invention is also described in the context of critical damping of the system. One of skill in the art will readily recognise, however, that the present invention generally operates over epochs. Thus, the damping provided may not be instantaneous critical damping at each instant of operation. The present invention will also be discussed in terms of packets and queues which are used prior to or after performing specific operations. However, one of skill in the art will readily realise that the methods and systems operate effectively for other pieces of traffic, such as cells, other queues, and prior to or after performing other operations. The present invention will also be discussed in terms of controlling network flows by proactively discarding packets. However, one of skill in the art will readily realise that the methods and systems control the rate of packets arriving in a queue and that a signal sent to a source and dictating a fraction of packets to be sent, with others held at the source, would be effective. Therefore, control of a transmission fraction is analogous control of a rate at which packets are offered, for example by one or more sources.

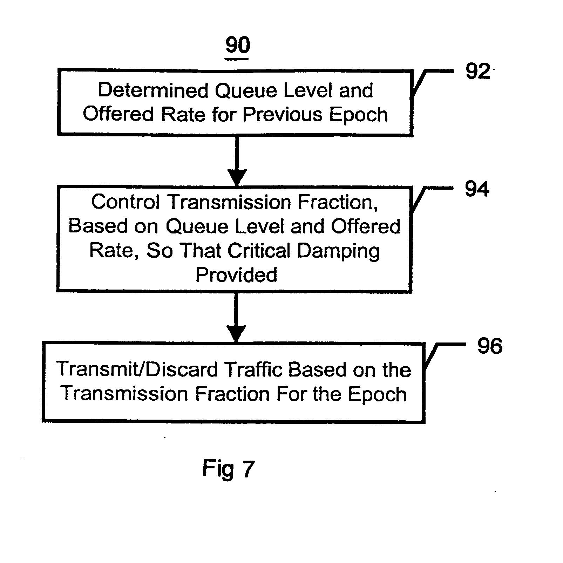

To more particularly illustrate a method and system in accordance with the present invention, refer now to Figure 7, depicting one embodiment of a method 90 in accordance with the present invention. The method 90 can be used with the switch 10 shown in Figure 1. For the purposes of clarity, the method 90 will be explained in conjunction with the queue 20 and enqueuing mechanism 19 depicted in Figure 3. However, the method 90 can be used with other queues, such as the queues 24, 28, 34. The method 90 can also be used with other enqueuing mechanisms, such as the enqueuing mechanisms 23, 27, 32. In a preferred embodiment, the method 90 is used in a system in which multiple queues are part of the same memory resource. However, nothing prevents the method 90 from being used in another system in which each queue has a separate memory resource.

Referring to Figure 7, the queue level and offered rate for the prior epoch are determined, via step 92. In a preferred embodiment, the queue level is determined at the end of the previous epoch and is the level of the memory resource. Also in a preferred embodiment, the offered rate determined in step 92 is the total offered input to the memory resource during the prior epoch. In a preferred embodiment, the transmission fraction for the prior epoch is also determined in step 92. In an alternate embodiment, the determination of the queue level in the method 90 includes determining the level of the queue 20 corresponding to the enqueuing mechanism 19. Also in a preferred embodiment, the transmission fraction is constant over an epoch and thus can be determined at any time during the previous epoch, but is preferably determined at the start of the previous epoch using the method 90.

The transmission fraction is then controlled so that the transmission fraction and queue level are critically damped over a range of queue levels, via step 94. The transmission fraction is controlled based on the queue level and the input fraction. In a preferred embodiment, the transmission fraction is also controlled based on the prior transmission fraction. In a preferred embodiment, step 94 calculates a change in the transmission fraction since the previous epoch in order to provide the desired transmission fraction for critical damping and adds the change in the transmission fraction to the transmission fraction for the previous epoch. The range of queue levels over which the transmission fraction is so controlled could extend over all possible queue levels. However, in a preferred embodiment, the range over which the transmission fraction is controlled for critical damping is between a minimum queue level greater than or equal to zero and a maximum queue level less or equal to than the maximum possible queue level. The transmission fraction is then used to discard packets so that the switch function is maintained, via step 96. The transmission fraction can be used to discard the appropriate fraction of packets because the transmission fraction is equal to one minus the discard fraction. As discussed above, the discard fraction is the fraction of packets to be discarded. In one embodiment, the packets are discarded randomly. However, in another embodiment, the packets are discarded based partially on the priority of the packet. Also in a preferred embodiment, discarding of a packet in step 96 also provides a notification to the sending host that the packet has been discarded. As a result, the host can temporarily suspend traffic to the switch 10.

As discussed above, the transmission fraction is controlled in step 94 to provide critical damping for the system described by the transmission fraction and the queue level. This allows the traffic through the queue 20 and, therefore, the switch 10 to rapidly reach a stable state. Because critical damping is provided, the traffic through the queue 20, as described by the queue level and the transmission fraction, should reach the stable state in a minimal amount of time. The transmission fraction required for critical damping and the relationship between the transmission fraction and the queue level can be described by various theories as follows.

The queue level and the discard rate can be thought of as variables which describe the state of the queue 20. When the queue level increases, the discard rate should increase to prevent the queue 20 from becoming filled. However, if the discard rate increases, the queue level should decrease. Thus, the queue can be thought of as having a positive-negative feedback loop, or relationship, between the queue level and the discard rate. This relationship is what can cause oscillations in the conventional system. The present invention can be thought of as adding friction to the discard rate so that the discard rate does not change as rapidly with queue level as it does in conventional methods for controlling traffic, such as RED. As a result, oscillations can be damped or prevented.

The present invention can also be explained using stability theory. However, for simplicity the transmission rate, rather than the discard rate is used. The queue level can be described using the transmission rate, the offered rate, and the output rate. The output rate is the rate at which items are sent out of the queue or the memory resource. The change in the queue level with respect to time is given by the transmission rate multiplied by the offered rate minus the output rate. Thus, the change with respect to time of the queue level is equal to the rate at which items are input to the queue minus the rate at which items are output from the queue. This can be explained as:

$$dQ(t)/dt = I(t)*T(t) - O(t)$$

where:

Q(t) =    Queue level
I(t) =    Rate that items (e.g. packets) are offered to enqueuing mechanism
T(t)      =
          = Transmission fraction e.g.) Fraction of items offered to enqueuing mechanism transmitted to queue
O(t) =    Rate at which items are output from queue

Also note that:

$$D(t) = 1 - T(t)$$

where:

$$D(t) = \text{the discard fraction}$$

Further, note that Q(t), I(t) and O(t) are inherently non-negative and that T(t) has values in the range [0,1].

The relationship between the time rate of change of the queue level and the transmission fraction is set by the properties of the queue 20. Similarly, the relationship between the discard fraction and the transmission fraction is set by their properties. However, the transmission fraction itself can be virtually any quantity desired. Moreover, the transmission fraction can vary as desired. Thus, the transmission fraction can be set to ensure that critical damping is provided. In a preferred embodiment, the transmission fraction is chosen to be described by:

$$dT(t)/dt = \kappa(t)*(\beta - a\,T(t) - Q/Q_{max})$$

where:

K (t) =    a number, which may depend on time

$\alpha$ =    a constant

β =        a constant

$Q_{max}$ =        the maximum possible queue level

Because there are no physical constraints imposed on the transmission fraction, other than it be between zero and one, and can be arbitrarily selected.

As discussed above, the goal for the transmission fraction is to provide critical damping, allowing the system to reach stability as rapidly as possible. For ease of explanation of critical damping, it will be assumed that the offered rate, I(t), and the output rate, O(t), are constant at equilibrium, the stable state. However, the analysis holds true even where I(t) and O(t) continue to vary, as is generally true of a network.

At equilibrium, the rate of change of the queue level with respect to time and the rate of change of the transmission with respect to time should be zero if the output rate and offered rate are constant. In other words, at equilibrium:

$$0 = I(t) * T(t) - O(t)$$
$$0 = (t)*(- T(t) - Q/Q_{max})$$
$$I(t) = I = constant$$
$$O(t) = O = constant$$

Consequently, at equilibrium,

$$T = O/I$$

$$\alpha * T = \beta - Q/Q_{max}$$

For clarity, also assume that at minimum, $Q/Q_{max}$ is a constant, such as 0.25. It is decided that the maximum ratio of I/O that is allowed in the domain of stability is 1.6; at this I/O ratio, Q reaches $Q_{max}$ and T = 5/8. Likewise, it is decided at Q less than or equal to $Q_{max}/4$ that T should be equal to one. Thus, at these two extreme equilibria:

$$0 = \beta - \alpha * 5/8 - 1$$

and

$$0 = \beta - \alpha - 1/4$$

From these assumptions, the numerical values of a and β can be determined to be 2 and 2.25, respectively. Note that other tolerances for $Q/Q_{max}$ and I/O can be made to have other numerical values of a and β. Thus, and can be determined based on equilibrium conditions and some assumptions about the ranges in which the switch 10 is desired to operate.

For stability, the linear approximation matrix for the queue level and transmission fraction system can be determined by taking partial derivatives. Thus, the matrix which describes the system is:

$$\neq (dQ/dt)/ \neq Q \quad\quad \neq(dQ/dt)/ \neq T \quad\quad\quad 0 \quad\quad\quad I$$
$$=$$
$$\neq (dT/dt)/ \neq Q \quad\quad \neq(dT/dt)/ \neq T \quad\quad\quad \kappa - (t)/Q_{max} \quad\quad \alpha - *(t)$$

The eigenvalues of the matrix have negative real parts. Thus, the trajectory for the system described by the queue level and transmission fraction is stable. That is, the traffic through the switch can thus be controlled to be stable over a range of levels. Furthermore, the eigenvalues are equal precisely if (t) = $I/Q_{max}$, the condition for critical damping. From differential equations theory, critical damping is provided when the square of the trace of the matrix for the system is equal to four multiplied by the determinant. In other words:

$$a^2 \ * \ \kappa^2(t) \quad = \quad 4* \ \kappa(t)*I/Q_{max}$$

or

$$\kappa(t) \qquad = \quad 4*I/(Q_{max}* \ a^{\ 2})$$
$$= \quad I(t)/Q_{max} \text{ for the assumptions made above}$$

Thus, j (t), $\alpha$ and $\beta$ can be chosen to result in a transmission fraction that will provide critical damping in the values for which the system is desired to operate. Using the equations above, the transmission fraction desired for providing critical damping can be provided for the switch 10. For example, using the assumptions above for $Q/Q_{max}$ and I/O, the system described by the transmission fraction and the queue level are:

$$Q(t + Dt) \quad = \quad Q(t) + [I(t)*T(t) - O(t)]*Dt$$

$$T(t + Dt) \quad = \quad T(t) + (I(t)*Dt/Q_{max})*(2.25 - 2*T(t) -Q(t)/Q_{max})$$

where:

Dt = Time interval between calculations of Q and T = Time for an epoch
$Q(t)/Q_{max}$ is greater than or equal to 0.25
I(t)/O(t) is less than or equal to 1.6

In order to account for the situations where the above conditions of Q(t), I(t) and O(t) are violated, the transmission fraction can be changed based on the queue level. For example, the transmission fraction can be made to be one when $Q/Q_{max}$ is less than 0.25. Similarly, when I(t)/O(t) is larger than 1.6, the queue will begin to fill more rapidly than desired. Consequently, the transmission fraction can be set to zero or some small value when the queue reaches a level at or near a maximum value.

As discussed above, although the above analysis was explained assuming that the offered rate, I(t), and the output rate, O(t), are constant at equilibrium, the analysis for critical damping holds when I(t) and O(t) are not constant at equilibrium. Thus, critical damping can still be provided, allowing the transmission fraction to rapidly accommodate changes in the queue level and, therefore, the offered rate and output rate.

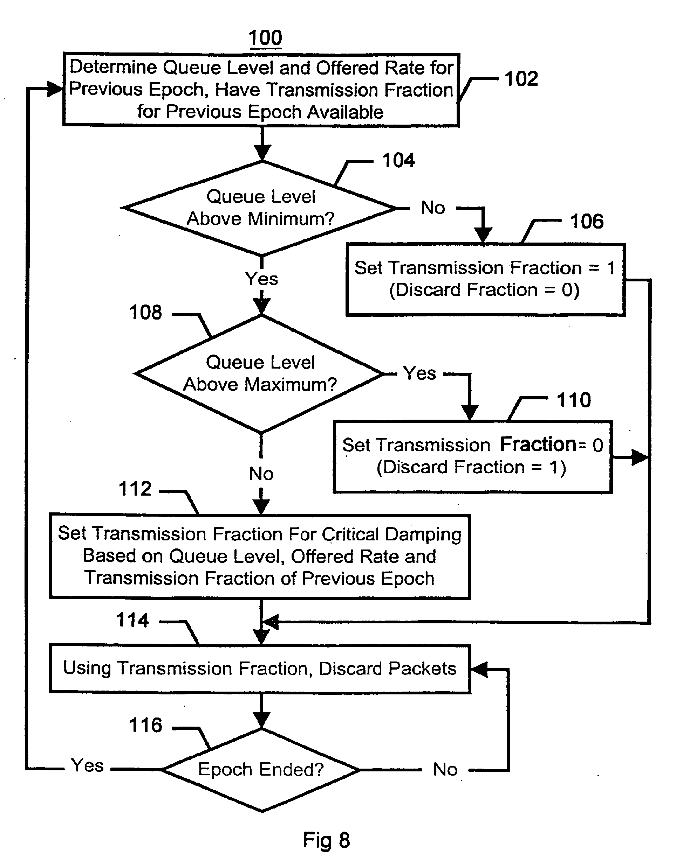

To more clearly explain the method and system in accordance with the present invention, refer to Figure 8, which depicts a more detailed embodiment of a method 100 for controlling traffic through a switch. For clarity, the method 100 will be described in using the enqueuing mechanism 19 and the queue 20 of the switch 10. Thus, the enqueuing mechanism 19 performs the method 100. However, the method 100 could be used by another enqueuing mechanism. Furthermore, although queue levels and offered rates to the enqueuing mechanism 19 are referred to, the queue level being determined could be for an entire memory resource and the offered rate could be for the entire memory resource.

The queue level and offered rate are determined for the previous epoch, via step 102. The queue level is preferably determined relative to a minimum queue level, $Q_{min}$, and a maximum queue level, $Q_{max}$, at the end of the epoch. The transmission fraction for the previous epoch is also available in step 102. Generally, the transmission fraction will have been determined using the method 100 and thus will be readily available. However, the transmission fraction may be determined if not already available.

It is then determined whether the queue level is above $Q_{min}$, via step 104. If not, then the transmission fraction is set to one, via step 106. Step 106 thus ensures that all packets will be transmitted by the enqueuing mechanism 19 to the queue 20 if the queue level is low enough. If it is determined that the queue level is above $Q_{min}$ in step 104, then it is determined whether the queue level is above $Q_{max}$, via step 108. If the queue level is above $Q_{max}$, then the transmission fraction is set to zero, via step 110. Thus, step 110 ensures that all packets will be discarded if the queue level is too high.

If the queue level is neither below $Q_{min}$ nor above $Q_{max}$. then in step 112 the transmission fraction is controlled for critical damping. In a preferred embodiment, the transmission fraction is set using the equations discussed above. Thus, the transmission fraction is set for critical damping based on the queue level, offered rate and transmission fraction from the previous epoch, as well as the length of the epoch. Using the transmission fraction set in step 106, 110, or 112, the packets are transmitted or discarded (stop 114) by the enqueuing mechanism 19 so that the fraction of packets provided to the queue 20 is equal to the transmission fraction. The packets are preferably randomly discarded, in a similar manner to what is used in conventional RED, discussed above with respect to Figure 4. However, referring back to Figure 8, the packets can also be discarded based on their priority. Furthermore, a notification is preferably sent back to the hosts sending the discarded packets so that the hosts can temporarily suspend traffic to the switch. It is then determined whether the current epoch has completed, via step 116. This may be accomplished by determining whether a particular time has elapsed since the calculation of the transmission fraction was completed. If the epoch has not completed, then step 114 continues. If the epoch has completed, then step 102 is returned to.

Thus, the transmission fraction can be set for critical damping using the method 90 or the method 100. Preferably critical damping occurs only in a desired range of queue levels. Outside of this range, the transmission fraction is set to zero or one, depending on whether the queue level is determined to be too high or too low for a critical damping calculation. Because packets can be discarded randomly or based at least in part on their priority, synchronisation of hosts sending traffic to the switch 10 can be prevented. Because critical damping is provided, the methods 90 and 100 can provide better stability for the system than method RED. The methods 90 and 100 also reach equilibrium more rapidly than method BLUE because critical damping is provided. Consequently, performance of a network using the switch 10 that utilise the method 90 or 100 is improved.

The improvement in performance using the method 90 or 100 can be seen experimentally. A network was modelled in which a bottleneck link existed. In addition, the network was provided with sufficient traffic such that approximately a thirty percent oversubscription was obtained. Thus, the network was purposely managed so that approximately thirty percent of the traffic would have to be discarded. During the experiment, method RED discarded approximately two thousand frames, or packets, by droptail (due to a maximum queue level, the next packet had to be dropped). As discussed previously, discarding frames by droptail occurs when frames are discarded simply because the queue is full. Discarding by droptail is undesirable because these frames are discarded when the queue is full. Discarding packets by droptail destabilises the network and fails to act according to the priority of packets.

In the same experiment, the present invention discarded no frames by droptail. Thus, the present invention could take into account the packets' priority when determining whether or not to perform a discard. Furthermore, the total number of frames transmitted by the present invention was higher than that of method RED. Consequently, the methods 90 and 100 can better manage traffic in a network even where there is a high oversubscription. In the embodiment here disclosed, the present invention operates well for oversubscription of up to at least fifty percent. As discussed above, because critical damping is provided, the methods 90 and 100 should also reach equilibrium more rapidly than method BLUE.

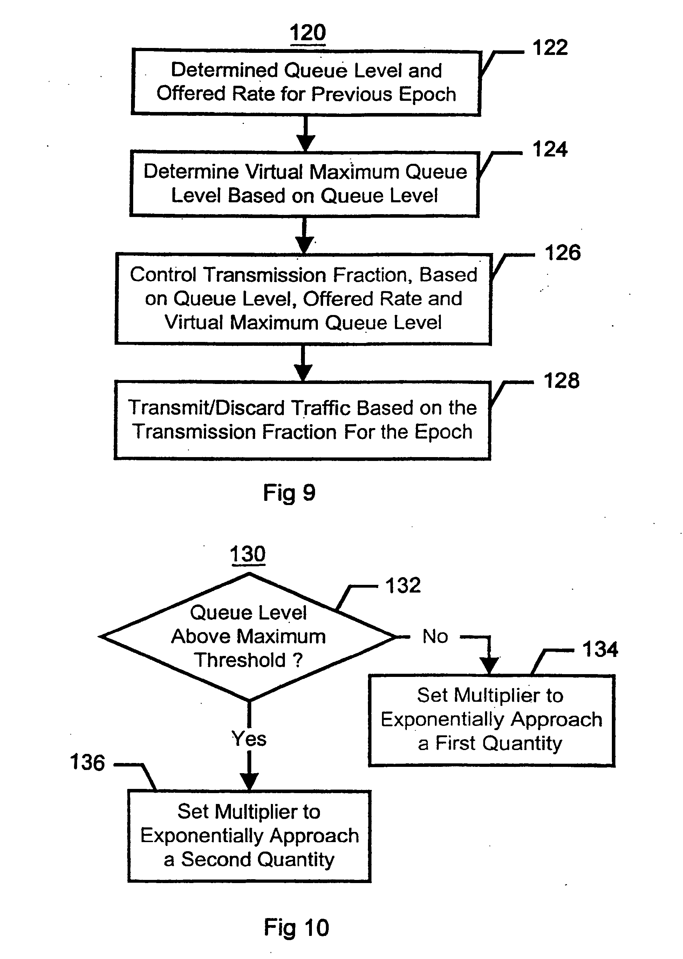

In another embodiment (120) of the present invention illustrated in Figure 9, the queue level and offered rate for the prior epoch are determined, via step 122. In a preferred embodiment, the queue level is determined at the end of the previous epoch and is the level of the memory resource. Also in a preferred embodiment, the offered rate determined in step 122 is the total offered input to the memory resource during the prior epoch. In a preferred embodiment, transmission fraction for the prior epoch is also determined in step 122. In an alternate embodiment, the determination of the queue level in the method 120 includes determining the level of the queue 20 corresponding to the enqueuing mechanism 19. Also in a preferred embodiment, the transmission fraction is constant over an epoch and thus can be determined at any time during the previous epoch, but is preferably determined at the start of the previous epoch.

A virtual maximum queue level for the queue 20 is determined using the queue level from the prior epoch, via step 124. The virtual maximum queue level is decreased when it is determined that the switch 10 is congested. The virtual maximum queue level is increased, up to a maximum which may be less than or equal to a maximum queue level possible, when it is determined that the switch is not congested. Preferably, this is accomplished by determining that the queue level is above a threshold that is less than a maximum queue level that is possible. In other words, the switch 10 is determined to be congested before the queue 20 fills. Because the virtual maximum queue level is used in determining the transmission fraction, the transmission fraction may be calculated as if the memory resource available for the queue 20 is smaller than the actual size of the memory resource. As a result, during incidents of high congestion, the transmission fraction can be set smaller than the transmission fraction otherwise would be. Consequently, the switch 10 is better able to cope with situations of high traffic.

The transmission fraction is then controlled based on the queue level, the offered rate and the virtual maximum queue level, via step 126. In a preferred embodiment, the transmission fraction is also controlled so that the system described by the transmission fraction and queue level, after the virtual maximum queue level has been determined, is critically damped. In a preferred embodiment, the transmission fraction is also controlled based on the prior transmission fraction. The range of queue levels over which the transmission fraction is so controlled could extend over all possible queue levels. However, in a preferred embodiment, the range over which the transmission fraction is controlled for critical damping is between a minimum queue level greater than or equal to zero and a maximum queue level less or equal to than the maximum possible queue level. The transmission fraction is also preferably controlled so that the queue level does not exceed the virtual maximum queue level. The transmission fraction is then used to discard packets so that the switch function is maintained, via step 128. The transmission fraction can be used to discard the appropriate fraction of packets because the transmission fraction is equal to one minus the discard fraction. As discussed above, the discard fraction is the fraction of packets to be discarded. In one embodiment, the packets are discarded randomly. However, in another embodiment, the packets are discarded based partially on the priority of the packet. Also in a preferred embodiment, discarding of a packet in step 128 also provides a notification to the sending host that the packet has been discarded. As a result, the host can temporarily suspend traffic to the switch 10.

Figure 10 is a flow chart depicting a preferred embodiment of a method 130 for determining the virtual maximum queue level in step 124 of the method 120 of Figure 9. In a preferred embodiment, the method 130 for updating the virtual maximum queue level is performed in parallel with updating the transmission fraction in step 126 of the method 120. Referring to Figure 10, it is determined whether the queue level is greater than or equal to a threshold, via step 132. The threshold is preferably a fraction of the maximum queue level. The fraction could be anywhere between zero and 1, but is preferably between ½ and 31/32. Preferably, the threshold is 31/32 of the maximum possible queue level. However, other fractions of the maximum possible queue level could be used, including 127/148, 7/8, 3/4 and 1/2. However, it should be noted that the queue level may remain below the maximum possible queue level at the cost of reduced throughput. If the queue level is greater than or equal to the threshold, then a multiplier is set, via step 134. In step 134, the multiplier is preferably set according to the function:

$$M(t + Dt) \;=\; \mathrm{minimum}\{\; 1, \; a * M(t) + b \;\}$$

where:

M(t) =    Multiplier calculated for the previous epoch
a =    A positive constant less than one, and preferably 31/32
b =    A positive constant greater than or equal to (1 - a ), less than one, and preferably 1/4

Thus, in a preferred embodiment, the multiplier approaches a first quantity, one in a preferred embodiment, when it is repeatedly determined in step 132 that the queue level exceeds a threshold.

If the queue level is less than the threshold, then the multiplier is set, via step 136. In step 136, the multiplier is preferably set according to the function:

$$M(t + Dt) \;=\; c\, M(t) + d$$

where:

M(t) =    Multiplier calculated for the previous epoch
c =    A positive constant less than one, and preferably 31/32
d =    A positive constant less than or equal to (1 - ), and preferably 1/64

Thus, in a preferred embodiment, the multiplier approaches a second quantity, namely, one-half, when it is repeatedly determined in step 132 that the queue level is below the threshold.

Thus, steps 134 and 136 determine the multiplier which is an exponentially weighted average of the previous multipliers with an upper limit of one. Furthermore, in instances of repeated congestion, when the queue level is repeatedly higher than the threshold, the multiplier will exponentially approach a first value, preferably one. When congestion is repeatedly avoided, when the queue level is repeatedly lower than the threshold, the multiplier will exponentially approach a second value, preferably one-half.

The virtual buffer capacity, or virtual maximum queue level, is defined as follows. In instances of repeated lack of congestion, when the queue is repeatedly below the threshold, the virtual buffer capacity is the same as the physical buffer capacity, designated as $Q_{max}$. In instances of repeated congestions, when the queue level is repeatedly above the threshold, the virtual buffer capacity is one-half of the physical buffer capacity, or $Q_{max}/2$. Those of ordinary skill in the art will appreciate that some fraction other than ½ might also suffice for the definition of virtual buffer capacity during instances of repeated congestion.

In some flow control algorithms as described above, the amount of data enqueued in a buffer is expressed as a fraction of maximum buffer capacity, $Q_{max}$. Thus, $Q_{max}$ appears as a denominator in some expressions, for example as the queue level $Q(t)$ divided by $Q_{max}$, that is $Q/Q_{max}$. The desired definition of virtual buffer capacity is therefore equivalent to use of the quantity $2*M*Q/Q_{max}$. That is, in instances of repeated lack of congestion, when M is ½ or nearly ½, the expression $2*M*Q/Q_{max}$ simply becomes $Q/Q_{max}$. In instances of repeated occurrences of congestion, when M is one or nearly one, the expression $2*M*Q/Q_{max}$ is simply $2*Q/Q_{max}$, or $Q/(Q_{max}/2)$. Thus, multiplying the queue occupancy fraction $Q/Q_{max}$ by two times the multiplier M has the effect of comparing Q to a virtual buffer capacity, or virtual maximum queue level.

In simulations with multi-switch models, the above definition and use of the multiplier M has been demonstrated to stabilise the calculation of the discard fraction in instances of severe congestion, up to eight to one congestion. Such congestion might momentarily arise in the operation of a switch when several incoming sources happen to have traffic for one outgoing sink.

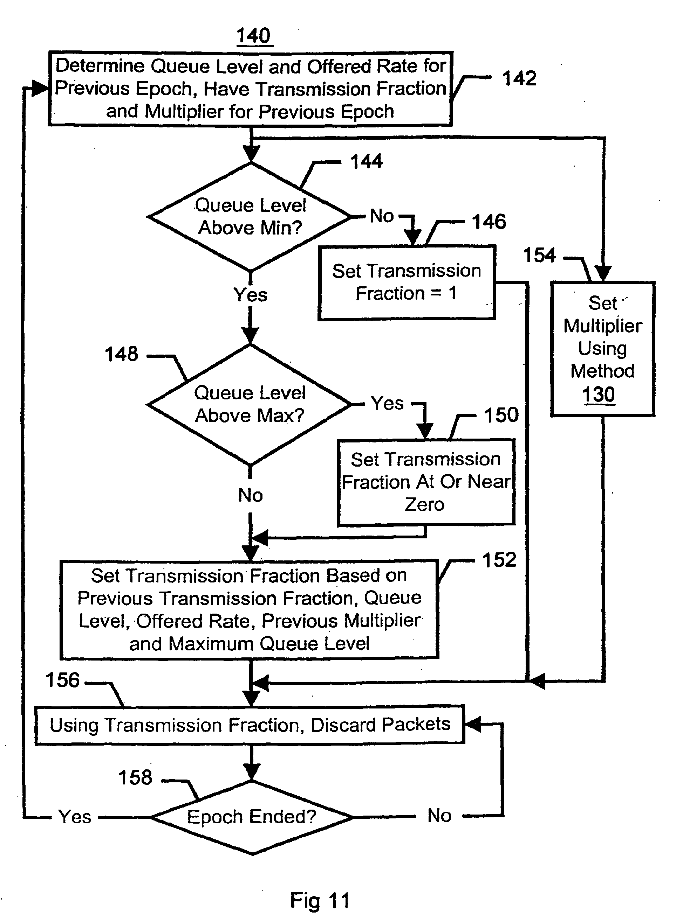

Figure 11 is a more detailed flow-chart of a method 140 in accordance with the present invention for controlling traffic in a network. The method 140 can be used with the switch 10 shown in Figures 1 and 3. For the purposes of clarity, the method 140 will be explained in conjunction with the queue 20 and enqueuing mechanism 19 depicted in Figure 3. However, the method 140 can be used with other queues and with other enqueuing mechanisms. In a preferred embodiment, the method 140 is used in a system in which multiple queues are part of the same memory resource. However, nothing prevents the method 140 from being used in another system in which each queue has a separate memory resource.

The queue level and offered rate for the previous epoch are determined, via step 142. Furthermore, the transmission fraction and the multiplier for the previous epoch are also preferably available in step 142 because these quantities were preferably calculated for the previous epoch. If, however, the transmission fraction and multiplier for the previous epoch are not available, these quantities are preferably determined in step 142. It is then determined if the queue level is greater than or equal to a minimum threshold, via step 144. In a preferred embodiment, the minimum threshold is one- quarter of the maximum queue level. If the queue level is not greater than or equal to the minimum threshold, the transmission fraction is set to one (step 146).

If the queue level is greater than the minimum threshold, then it is determined whether the queue level is above a maximum threshold, via step 148. In a preferred embodiment, step 148 includes determining whether the queue level exceeds the virtual maximum queue level.

If it is determined that the queue level is above the maximum threshold, then the transmission fraction is set at or near zero, via step 150. If, however, it is determined that the queue level is not above the maximum threshold, then using the multiplier for the previous epoch, the queue level, the prior transmission fraction, the offered rate and the maximum queue level, the transmission fraction is determined, via step 152. In a preferred embodiment, the transmission fraction is given by:

$$T(t + Dt) \;=\; \text{minimum}\{1, \text{maximum}(1/8,\; T(t) + (2*I(t)*M(t)*Dt/Q_{max})*(9/4 - 2*T(t) - 2*M(t)*Q(t)/Q_{max}))\}$$

where:

M(t) = the multiplier from the previous epoch
Dt = the length of the epoch in appropriate time units

Note that in the equation for T(t + Dt) the multiplier M(t) appears. Both T and M are simultaneously updated every Dt time units. In addition, not that the multiplier M(t) appears twice in the equation for T(t + Dt). It appears in the term $2*M(t)*Q(t)/Q_{max}$ as described above. The effect is to divide buffer capacity by two in instances of repeated congestion. The multiplier M(t) also appears in the term $2*M(t)*I(t)*Dt/Q_{max}$. Here the number of bits offered to the queue system over the time interval Dt is I(t)*Dt. This amount is compared to Qmax to result in a fraction $I(t)*Dt/Q_{max}$. This fraction is then multiplied by 2*M(t). Again, the affect is to divide buffer capacity by two in instances of congestion.

In a preferred embodiment, in parallel with the calculation of the transmission fraction, the multiplier is updated, via step 154. In a preferred embodiment, the multiplier is updated using the method 130 depicted in Figure 10. Note, however, that nothing prevents the multiplier from being updated in series with the transmission fraction. Furthermore, nothing prevents the use of the multiplier for the current epoch in calculating the transmission fraction for the current epoch. However, in such a case, the mathematical formula for the transmission fraction in step 152 of Figure 11 will be different.

Using the transmission fraction set in step 146, step 150 or step 152, the enqueuing mechanism 19 proactively discards packets to maintain the function of the switch 10, via step 156. It is determined whether the epoch has ended, via step 158. If not, then step 156 is returned to. Otherwise, step 142 is repeated.

The methods 120 and 140 are stable, allowing traffic to be controlled in the switch 10. Furthermore, using the method 120 or 140, a high amount of traffic can be accounted for using the virtual maximum queue level or the multiplier. Thus, a switch 10 utilising one embodiment of the method 120 or 140 might accommodate an oversubscription of eight hundred percent, continuing to function without filling the queue or memory resource even when highly oversubscribed. Furthermore, using the method 150, the transmission function and queue level are critically damped, assuming the multiplier is already set or is otherwise considered constant for the purposes of determining damping. Because the queue level and transmission fraction are critically damped, the switch 10 will reach equilibrium as rapidly as possible.

It is also contemplated that the present invention provide a method and system for controlling a plurality of pipes in a computer network. As has been disclosed, the computer network includes at least one processor for a switch. The at least one processor has a queue. The plurality of pipes utilises the queue for transmitting traffic through the switch. The method and system comprise allowing a minimum flow and a maximum flow to be set for each of the plurality of pipes and determining if excess bandwidth exists for the queue. The method and system also comprise linearly increasing a flow for a pipe of the plurality of pipes based on the minimum flow or the maximum flow if excess bandwidth exists and if the flow for the pipe of the plurality of pipes is less than the maximum flow for the pipe. The method and system also comprise exponentially decreasing the flow for the pipe of the plurality of pipes based on the minimum flow or the maximum flow if excess bandwidth does not exist and the flow is greater than the minimum flow for the pipe. Thus the traffic through the queue is stable.

The present invention now will be described in terms of such pipes through, or flows provided to, a queue. However, one of skill in the art will readily realise that the pipes could be behaviour aggregate flows of different or the same class or any offered rate into a particular component which utilises a queue for storage.

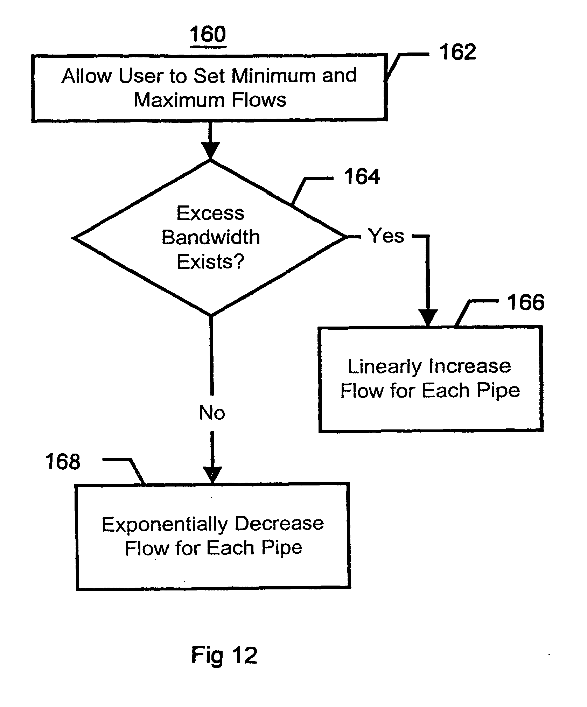

To more particularly illustrate the method and system in accordance with the present invention, refer now to Figure 12, depicting one embodiment of a method 160 in accordance with the present invention. The method 160 can be used with the switch 10 shown in Figures 1 and 3. Thus, the method 160 can be carried out in a switch 10 having multiple blades 7, 8 and 9 and multiple ports on each blade 7, 8 or 9. For the purposes of clarity, the method 160 will be explained in conjunction with the queue 20 and enqueuing mechanism 19 depicted in Figure 3. However, the method 160 can be used with other queues, such as the queues 22, 28, 34. The method 160 can also be used with other enqueuing mechanisms, such as the enqueuing mechanisms 23, 27, 32. In a preferred embodiment, the method 160 is used in a system in which multiple queues are part of the same memory resource. However, nothing prevents the method 160 from being used in another system in which each queue has a separate memory resource.

Referring to Figures 3 and 12, the minimum and maximum flows for pipes providing traffic to the queue 20 are set, via step 162. The pipes may come from any of the ports A 18 to the enqueuing mechanism 19. In a preferred embodiment, the pipes of interest are behaviour aggregate flows. Thus, step 162 preferably sets the minimum and maximum bandwidth for behaviour aggregate flows of interest. Furthermore, the sum of the minimum flows for the pipes should be less than or equal to the service rate, S, of the shared queue processor. This is because flows are defined as a fraction of the total amount of traffic which the queue 20 can service. The minimum flow for a pipe can be zero. Typically, the queue 20 has a defined service rate, the rate at which the queue 20 can output items from the queue. In a preferred embodiment, the sum of the minimum flow rates is less than one-half of the service rate, S. Also in a preferred embodiment, the maximum flow for each pipe is less than or equal to the service rate. Although in a preferred embodiment the maximum number of pipes serviced by the queue 20 is less than or equal to 1024, there is no real upper limit on the number of pipes controlled. In addition, each pipe offers traffic to the queue 20 at an offered rate, $I_i(t)$, where i denotes the $i^{th}$ pipe. Depending on different factors, some of the traffic may be dropped. The transmission fraction for the $i^{th}$ pipe, $T_i(t)$, is the fraction of traffic from the $i^{th}$ pipe which is transmitted to the queue 16. Thus, the instantaneous flow for the $i^{th}$ pipe is $f_i(t) = I_i(t) * T_i(t)$. In a preferred embodiment, the method 160 can also ensure that the pipes having traffic flowing through them have at least their minimum flows.

It is determined whether the queue 20 has excess bandwidth available, via step 164. In a preferred embodiment, excess bandwidth is determined not to exist if the queue level is increasing. Also in a preferred embodiment, excess bandwidth is determined to exist in step 164 if the queue 20 is empty or if the queue level for the queue 20 is decreasing. Thus, step 164 preferably includes determining a queue level and comparing the queue level to a previous queue level. Also in a preferred embodiment, excess bandwidth is determined not to exist if the queue level is not either zero or decreasing. However, nothing prevents the use of another criteria for determining whether excess bandwidth exists.

If it is determined in step 164 that excess bandwidth exists, then the flows for the pipes are increased linearly, via step 166. Preferably, step 166 is accomplished by linearly increasing the transmission fraction for each of the pipes. The linear increase for a pipe can be based on the minimum flow, the maximum flow, or a weight. Thus, the linear increase for a pipe can be based on the pipe's minimum flow only, the maximum flow only, some combination of a minimum flow and the weight, some combination of the maximum flow and the weight, or some combination of the minimum and maximum flows and the weight. However, in a preferred embodiment, the linear increase for the pipe is based on the minimum flow for the pipe.

If it is determined in step 164 that excess bandwidth does not exist, then flows for the pipes are decreased exponentially, via step 168. Preferably, step 168 is accomplished by exponentially decreasing the transmission fraction for each pipe. The exponential decrease for a pipe can be based on the minimum flow or the maximum flow. Thus, the exponential decrease for a pipe can be based on the pipe's minimum flow only, the maximum flow only, or some combination of the minimum and maximum flows. However, in a preferred embodiment, the exponential decrease for the pipe is based on the minimum flow for the pipe. Because the decrease is exponential in nature, the decrease is also based on the current flow, or transmission fraction, for the pipe.

Because the method 160 increases flows linearly and decreases flows exponentially, the method 160 generally ensures that the traffic through pipes to the queue 20 can automatically and asymptotically reach stability. Flows will increase or decrease depending upon whether the queue 20 has excess bandwidth. When stability is reached, flows will linearly increase as long as excess bandwidth exists, then will exponentially decrease, due to the lack of excess bandwidth, until excess bandwidth again becomes available. This behaviour will repeat. In other words, the traffic from the pipes can settle into a steady cyclic state known as a limit cycle. Thus, regardless of the state in which the traffic through the pipes commences, the system will move toward stable cyclic behaviour. This stable behaviour may not be achieved with another combination of increases and decreases. For example, an exponential increase and a linear decrease or an exponential increase and an exponential decrease may not produce stable behaviour. Furthermore, the increase and decrease in the flow for each pipe will depend upon the minimum or maximum flow for the pipe and the previous flow for the pipe. Thus, different pipes may have different levels of flow, or service. Consequently, the method 160 can not only produce stable behaviour, but can also provide differentiated services and allocate excess bandwidth for the queue 20 fairly. All a network administrator or other user must do is set the minimum and maximum flows for customers differently depending upon the level of service desired for the particular customer. Thus, the method 160 can be used in a variety of applications, such as in networks using DiffServ, by internet service providers desiring to provide different levels of service to different customers or for different media. This is accomplished merely by allowing the minimum and maximum flow to be set for the behaviour aggregate flows, the customers, the media, classes or other flows corresponding to the pipes in the method 160.

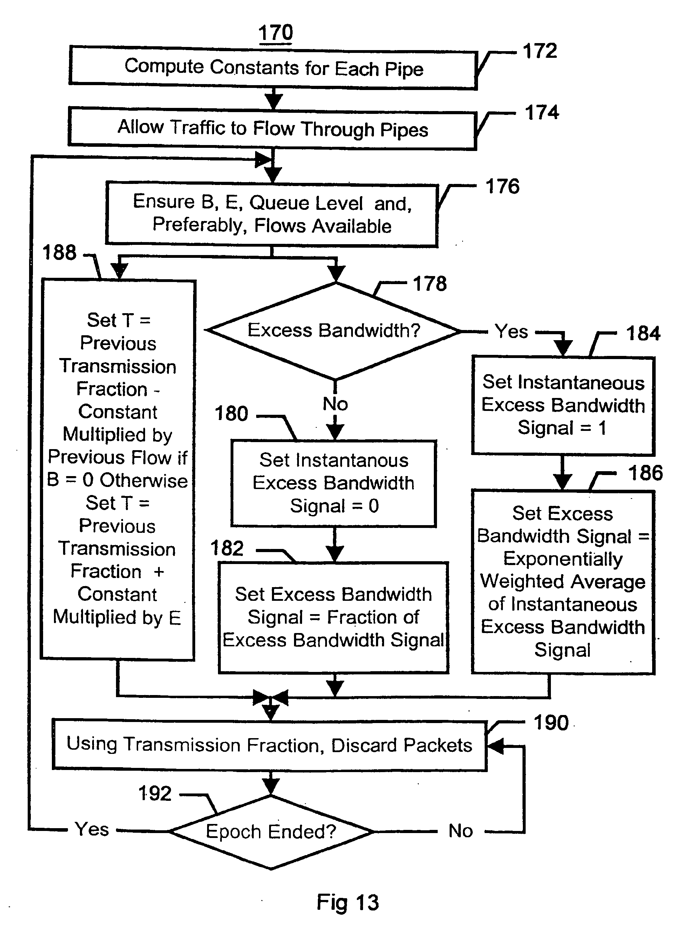

Figure 13 depicts a more detailed flow chart of a method 170 in accordance with the present invention for providing differentiated services with the switch 10 shown in Figures 1, and 3. Thus, the method 170 can be carried out in a switch 10 having multiple blades 7, 8 and 9 and multiple ports on each blade 7, 8 or 9. For the purposes of clarity, the method 170 will be explained in conjunction with the queue 20 and enqueuing mechanism 19 depicted in Figure 3. However, the method 170 can be used with other queues, such as the queues 24, 28, 34. The method 170 can also be used with other enqueuing mechanisms, such as the enqueuing mechanisms 23, 28, 32. In a preferred embodiment, the method 170 is used in a system in which multiple queues are part of the same memory resource. However, nothing prevents the method 170 from being used in another system in which each queue has a separate memory resource. Furthermore, the method 170 will be described in the context of pipes, however, the method 170 can be used for a variety of components, including behaviour aggregate flows, which correspond to pipes.

The method 110 commences after the minimum and maximum flows for each of the pipes being controlled have been set, for example by a network administrator. Constants are computed for each of the pipes based on the minimum and maximum flows for the pipe, via step 172. For each pipe, i, a constant $C_i$ and a constant $D_i$ are computed in step 172. The constant $C_i$ its used for linearly increasing the flow for pipe i, as discussed below. Similarly, the constant $D_i$ is used for exponentially decreasing the flow for the pipe i, as discussed below. In a preferred embodiment, the constants $C_i$ and $D_i$ are both based on the minimum flows. In an alternate embodiment, weights for different pipes can also be provided. In such a case, the constant $C_i$ and $D_i$ may also be calculated based on the weights provided.

Once the constants are determined, traffic is allowed to flow through the pipes to the queue 20, via step 174. The queue level, instantaneous excess bandwidth signal, B, and the excess bandwidth signal, E, are determined for the prior epoch if not already available, via step 176. In a preferred embodiment, the flows for the prior epoch are also made available in step 176. In other words, step 176 determines the quantities necessary to update the system in the method 170. It is then determined whether excess bandwidth exists, via step 178. In a preferred embodiment, excess bandwidth is determined to exist only if the queue level for the queue 20 is zero or is decreasing. Otherwise it will be determined that excess bandwidth does not exist. However, nothing prevents the use of another criteria for determining whether excess bandwidth exists. In a preferred embodiment, the queue level determined is the level for the entire memory resource. However, nothing prevents the queue level being determined for a logical queue or subqueue. If excess bandwidth does not exist, then an instantaneous excess bandwidth signal, B, is set to zero, via step 180. The signal B is termed instantaneous because it is based upon a single measurement of the queue level and a single determination of the change in the queue level. An excess bandwidth signal, E, is then set to be a constant multiplied by a previous excess bandwidth signal, via step 182. Preferably, the constant is 31/32 and should generally be less than one. In a preferred embodiment, the excess bandwidth signal is an exponentially weighted average of the instantaneous excess bandwidth signal. The value of the excess bandwidth signal is appropriately set in step 182 because the instantaneous excess bandwidth signal is zero.

If it is determined in step 178 that excess bandwidth does exist, then the instantaneous excess bandwidth signal is set to one, via step 184. The excess bandwidth signal is then set to an exponentially weighted average of the instantaneous excess bandwidth signal, via step 186. Thus, in a preferred embodiment, the excess bandwidth signal is a first constant multiplied by a previous excess bandwidth signal plus a second constant multiplied by the instantaneous excess bandwidth signal. The first and second constant may both be less than one and are preferably 31/32 and 1/32, respectively.

In a preferred embodiment, the transmission fraction for each pipe i is set, via step 188, in parallel with the steps 178 through 186. However, in an alternate embodiment, the transmission fraction can be updated serially with the instantaneous excess bandwidth signal and the excess bandwidth signal. If the previous instantaneous excess bandwidth signal, B, was one (excess bandwidth available), then step 188 would set the transmission fraction for each pipe i based on the previous transmission fraction, the constant $C_i$, and the excess bandwidth signal. Preferably, the transmission fraction set in step 188 for excess bandwidth previously existing is:

$$T_i(t + Dt) = T_i(t) + C_i*E(t)$$

Where:

Dt = Length of an epoch (time since transmission fraction last calculated)

Preferably, the flow units are set so that Dt and the maximum possible queue level, $Q_{max}$, are one. Thus, the transmission fraction linearly decreases. Furthermore, the transmission fraction will continue to linearly increase as long as excess bandwidth continues to exist. If excess bandwidth did not exists in the previous epoch (B was zero), then in step 188 the transmission fraction, $T_i(t + Dt)$ for each pipe i is then set based on a previous transmission fraction for the pipe, $T_i(t)$, $D_i$, and the previous flow for the pipe, $f_i(t)$. The transmission fraction when excess bandwidth did not previously exist is preferably given by:

$$T_i(t + Dt) = T_i(t) - D_i*f_i(t)$$

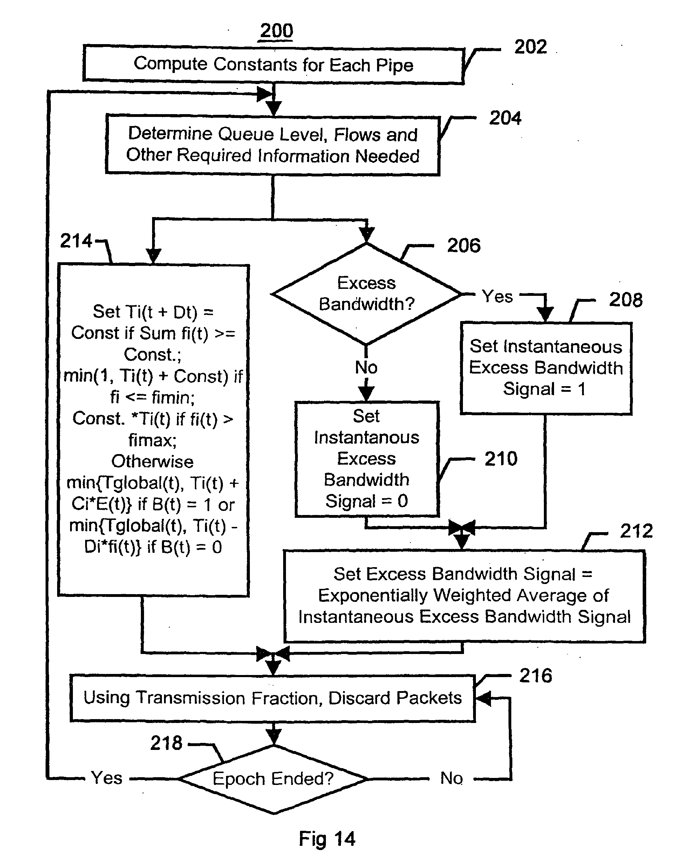

Thus, the transmission fraction set in step 188 ensures that the transmission fraction and, therefore, the flow will exponentially decrease as long as excess bandwidth continues not to exist. The constants $C_i$ and $D_i$ are preferably based on minimum flow values. The exact preferred values for the constants $C_i$ and $D_i$ are discussed below, with reference to Figure 14.

Referring back to Figure 13, using the transmission fraction calculated in step 188, packets passing through the switch 10 are transferred or dropped during the epoch, via step 190. In a preferred embodiment, packets are dropped based not only on the transmission fraction for the pipe in which they are flowing, but also on the priority of each packet. In another embodiment, the packets are dropped randomly. It is determined whether the epoch is completed, via step 192. If not, then traffic continues to be transferred based on the same transmission fractions, via step 190. If the epoch has finished, then the method repeats commencing with step 176.

Because the method 170 increases flows linearly and decreases flows exponentially, the method 170 functions similarly to the method 160 and provides many of the same benefits. Thus, the method 170 can ensure that the traffic through pipes to the queue 20 can automatically and asymptotically reach stability. The traffic from the pipes can settle into a steady cyclic state known as a limit cycle. Thus, regardless of the state in which the traffic through the pipes commences, the system will move toward stable cyclic behaviour. Furthermore, the increase and decrease in the flow for each pipe will depend upon the minimum flow for the pipe and the previous flow for the pipe. Thus, different pipes may have different levels of flow, or service. Consequently, the method 170 can produce stable behaviour, allocate excess bandwidth for the queue 20 fairly, and provide differentiated services. All a network administrator or other user must do is set the minimum and maximum flows for customers differently depending upon the level of service desired for the particular customer. Thus, the method 170 can be used in a variety of applications, such as in networks using DiffServ, by internet service providers desiring to provide different levels of service to different customers or for different media. This is accomplished merely by allowing the minimum and maximum flow to be set for the behaviour aggregate flows, customers, classes, media, or other flows corresponding to the pipes in the method 170.

Furthermore, if the decrease in the flow rate from the transmission fractions is fast enough, the area under the curves describing flows for pipes is proportional to the slope of the linear increase in the flow. The area under the curve for a flow indicates the bits per second flowing through a pipe into the queue 20. The flow through a pipe can also be calculated over an epoch, indicating the exact flow through a pipe. Thus, the flow, or bandwidth as defined in DiffServ, is regulated.

Figure 14 depicts a more detailed flow chart of a preferred embodiment of a method 180 for providing differentiated services. The method 180 preferably incorporates the inventions disclosed hereinabove. In general, the method now to be disclosed utilises the inventions disclosed above to control the transmission fractions at a high level when necessary and otherwise uses a method similar to the methods earlier disclosed.

The method 180 can be used with the switch 10 shown in Figures 1, and 3. Thus, the method 180 can be carried out in a switch 10 having multiple blades 7, 8 and 9 and multiple ports on each blade 7, 8 or 9. For the purposes of clarity, the method 180 will be explained in conjunction with the queue 20 and enqueuing mechanism 19 depicted in Figure 3. However, the method 180 can be used with other queues, such as the queues 24, 28, 34. The method 180 can also be used with other enqueuing mechanisms, such as the enqueuing mechanisms 23, 27, 32. In a preferred embodiment, the method 180 is used in a system in which multiple queues are part of the same memory resource. However, nothing prevents the method 180 from being used in another system in which each queue has a separate memory resource. Furthermore, the method 180 will be described in the context of pipes, however, the method 180 can be used for a variety of components, including behaviour aggregate flows, which correspond to pipes.

The method 180 preferably commences after the minimum and maximum flows and, where used, weights, for each of the pipes has been set. As discussed previously, the sum of the minimum flows should be less than one and is preferably less than half of the service rate for the queue 20. Also in a preferred embodiment, each of the minimum and maximum flows is less than the service rate. In a preferred embodiment, the number of flows is less than or equal to sixty-four. In a preferred embodiment, the weight for each pipe is one and, therefore, does not affect behaviour of the switch 10. As discussed above, the offered rate to a queue by a pipe, $I_i(t)$, is multiplied by the transmission fraction for the pipe, $T_i(t)$, in order to obtain the flow for the pipe, $f_i(t)$.

Constants for increasing or decreasing the flows for the pipes are determined based on the minimum flows and, where used, the weights, via step 182. Preferably, the constant for increasing the flow, $C_i$, and the constant for decreasing the flow, $D_i$, of a pipe are calculated as follows:

$$C_i \quad = \quad N*(W_i/W)*(S + f_{imin} - S \sum_j f_{jmin})/16$$

If all of the weights are equal to one, as in a preferred embodiment, then:

$$C_i \quad = N*(S + f_{imin} - S \sum_j f_{jmin})/16$$

$$D_i \quad = \quad (S - f_{imin})*4$$

where:

N =      the number of flows to which the bandwidth is to be allocated
$W_i$ =      weight for the $i^{th}$ pipe, which is preferably in the range [0,1]
W =      sum of all N weights
$f_{imin}$ =      minimum flow for the $i^{th}$ pipe

In addition, the flow units are again chosen so that Dt is one and $Q_{max}$ is one.

The flows for the pipes and the queue level of the queue 20 are determined, via step 184. If an epoch has just completed, then the flows and queue level for the previous epoch are determined. The flows are determined over the entire epoch, while the queue level is preferably the queue level at the end of the epoch. In a preferred embodiment, the queue level is the level of the entire memory resource of which the queue 20 is a part. However, in another embodiment, the queue level can be for a logical queue or subqueue. In a preferred embodiment, the instantaneous excess bandwidth signal, B, and the excess bandwidth signal, E are made available if not already determined for a previous epoch. Thus, the information required for the ensuing calculations is available.

It is determined whether excess bandwidth exists for the queue 20, via step 186. In a preferred embodiment, step 186 includes determining whether the queue level is zero or decreasing. However, nothing prevents the use of another criteria for determining whether excess bandwidth exists. If the queue level is decreasing or zero, then it is determined in step 186 that excess bandwidth exists. Otherwise, it is determined that excess bandwidth does not exist. If excess bandwidth exists, then an instantaneous excess bandwidth signal is set to one, via step 188. If not, then the instantaneous excess bandwidth signal is set to zero, via step 190.

The bandwidth signal is then set to be an exponentially weighted average of the instantaneous bandwidth signal, via step 192. In a preferred embodiment, the exponentially weighted bandwidth signal is set to be:

$$E(t + Dt) = (31/32)*E(t) + B(t + Dt)/32$$

Where:

$E(t + Dt) =$      Excess bandwidth signal for current epoch
$E(t) =$      Excess bandwidth signal for previous epoch
$B(t + Dt) =$      Instantaneous excess bandwidth signal for the current epoch

In parallel with the updating of the instantaneous bandwidth signal and the bandwidth signal in steps 186 through 192, the transmission fraction for the current epoch is updated, via step 194. The transmission fraction is set in step 194 such that the minimum flow is provided for each active pipe when possible, such that the flow for each pipe does not exceed the maximum, such that the flow linearly increases and exponentially decreases as long as the queue 20 (or corresponding memory resource) has not exceeded a desired level and, where needed, and such that the transmission fraction is set such that the system described by the queue level and the global transmission fraction are critically damped and can account for a higher oversubscription rate. Critical damping means that the system described by the queue level and global transmission fraction reach equilibrium as rapidly as possible. In a preferred embodiment, the transmission fraction for each pipe is set such that:

$T_i(t + Dt)$      = A if the sum of the offered rates at time t is greater than or equal to a constant D; = min$\{1, Ti(t) + F\}$ if $f_i(t)$ is less than or equal to $f_{imin}$; = G*$T_i(t)$ if $f_i(t)$ is greater than $f_{imax}$; and otherwise = min$\{T(t),$ if B(t) = 1 then $T_i(t) + C_i*E(t)$ else $T_i(t) - D_i*f_i(t)$ if B(t) = 0$\}$

Where:

A =      a constant less than one and preferably .125
D =      a constant less than one and preferably .25
F =      a constant less than one and preferably .125
G =      a constant less than one and preferably .875
T(t) =      a global transmission fraction

Preferably, the global transmission fraction is given by:

$$T(t) = minimum\{1, maximum(1/8, T(t - Dt) + 2*I(t-Dt)*M(t-Dt)*Dt/Q_{max})*(9/4 - 2*T(t) - 2*M(t)*Q(t)/Q_{max}))\}$$

where:

$M(t - Dt)$      = the multiplier from the previous epoch = the multiplier approaches one in a preferred embodiment when it is repeatedly determined that the queue level exceeds a threshold and ½ when it is repeated determined that the queue level does not exceed the threshold
$Dt$      = the length of the epoch in appropriate time units

Thus, the global transmission fraction ensures that the queue level and global transmission fraction are critically damped and that oversubscription can be accounted for.

Based on the transmission fraction determined in step 194, packets, or pieces of traffic, for the pipes are transmitted or dropped, via step 196. In a preferred embodiment, step 196 accounts for the priority of a packet when determining whether to drop a particular packet. In another embodiment, individual packets are randomly dropped to maintain the calculated transmission fractions.

It is then determined whether the epoch has completed, via step 198. If not, then the packets continue to be dropped or transmitted, via step 196. If the epoch has completed, then step 182 is returned to in order to update the values for the next epoch.

The method 180 results in much the same benefits as the methods 160 and 170 in that differentiated services can be provided in a stable manner and excess bandwidth can be allocated fairly. This is accomplished with minimal effort by the user, merely setting the minimum and maximum flows for the pipes. The method 180 can also be used in a variety of applications, such as in networks using DiffServ, by internet service providers desiring to provide different levels of service for different customers, classes, behaviour aggregate flows or different media. This is accomplished merely by allowing the minimum and maximum flow to be set for the behaviour aggregate flows, the customers, the media, or other flows corresponding to the pipes in the method 180. Thus, the flow through the pipe, a DiffServ criterion of service, can be regulated as desired.

Furthermore, the method 180 takes advantage of the additional benefits of two of the above-described methods. Because the global transmission fraction can be used, the method 180 can account for higher congestion in an efficient manner. Use of the multiplier, which corresponds to a virtual maximum queue level that decreases as the queue 20 is repeatedly above a threshold, ensures that the switch can remain stable over a wide range of subscriptions. In one embodiment, an oversubscription of up to eight hundred percent may be accounted for. Furthermore, since the global transmission fraction is, in a sense, critically damped, the system described by the queue level and global transmission fraction will rapidly reach a stable state. Consequently, the method 180 allows the desired transmission rates for equilibrium to be rapidly achieved.

It is envisioned that in general, the switch 10 will use the portion of the method 180 that corresponds to the method 160 and 170. Thus, the pipes will generally be regulated such that a stable limit cycle is achieved. In a preferred embodiment, the flow through a pipe will increase until the queue level is no longer decreasing and will decrease until the queue level is decreasing or zero. It is believed that this will be the normal mode of operation. However, in critical cases, for example because several pipes suddenly become active and desire their minimum flows or the queue level exceed a threshold, another methodology may become active. For example, the global transmission fraction can be utilised to try to ensure that the queue 20 does not become full. When the critical, and typically transitory, state has been accounted for, the transmission fractions which result in the stable limit cycle will again be used. Thus, a switch using the method 180 may operate effectively over a wider range of subscriptions.

The present inventions also contemplate methods and systems which comprise setting a transmit fraction for a flow for a pipe of the plurality of pipes to be a minimum of the global transmit fraction and a differential transmit fraction. The differential transmit fraction can linearly increase the flow based on the minimum flow or the maximum flow if excess bandwidth exists and if the flow for the pipe is less than the maximum flow set for the pipe. The differential transmit fraction can also exponentially decrease the flow for the pipe based on the minimum flow or the maximum flow if excess bandwidth does not exist and the flow is greater than the minimum flow set for the pipe. Thus traffic through the queue is stable. The method and system also comprise controlling transmission of traffic to the queue based on the transmit fraction and utilising a scheduler to control traffic from the queue. The scheduler might enable one policy or a combination of policies. For example, the scheduler might utilise one or a combination of the following policies: First In First Out, Priority Queuing, Custom Queuing, Weighted Fair Queuing, Class Based Weighted Fair Queuing, Versatile Interface Processor Weighted Fair Queuing, Round Robin, Weighted Round Robin, or other known queuing policies.

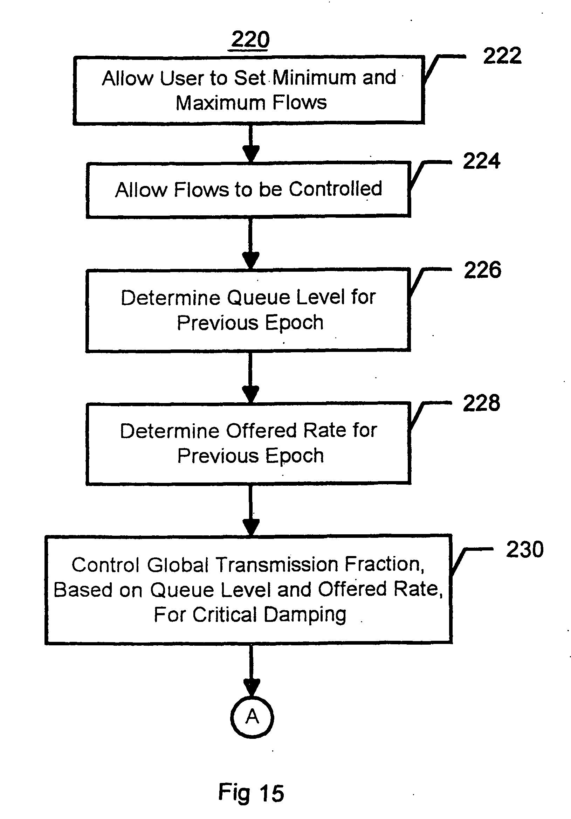

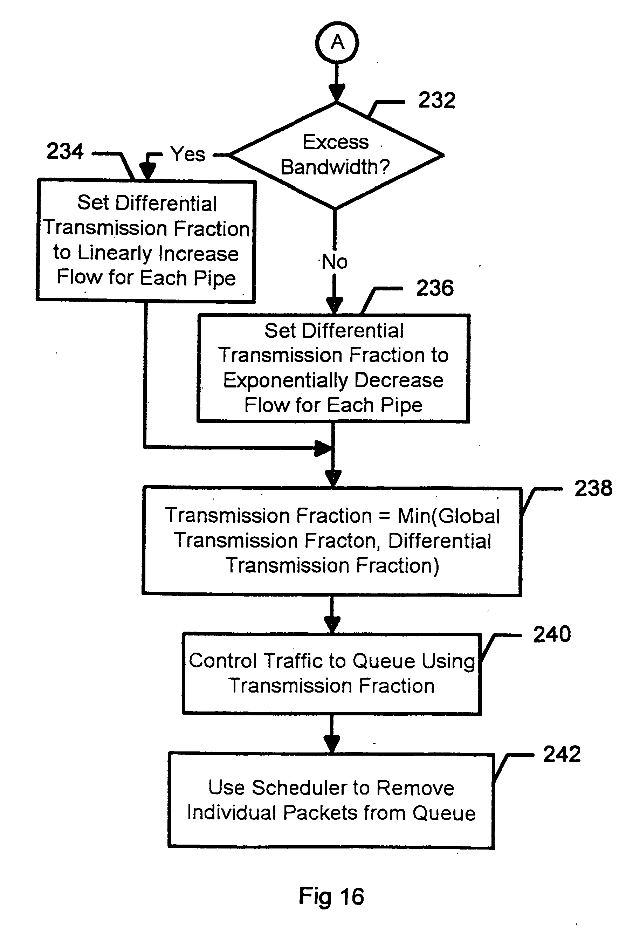

To more particularly illustrate an additional method and system in accordance with the present invention, refer now to Figures 15 and 16, depicting one embodiment of a method 220 in accordance with the present invention. The method 220 can be used with the switch 10 shown in Figures 1 and 3. Thus, the method 220 can be carried out in a switch 10 having multiple blades 7, 8 and 9 and multiple ports on each blade 7, 8 or 9. For the purposes of clarity, the method 220 will be explained in conjunction with the queue 34 and enqueuing mechanism 32 depicted in Figure 3. In a preferred embodiment, the method 220 is used on the egress side of the switch 10 and, therefore, the egress portion of the network processor 5. Thus, the method 220 is preferably used with the enqueuing mechanism 32, the queue 34 and the scheduler 35. However, nothing prevents the method 220 from being used with other queues, such as the queues 20, 24, 28, other enqueuing mechanisms, such as the enqueuing mechanisms 19, 23, 27, and other schedulers. In a preferred embodiment, the method 220 is used in a system in which multiple queues are part of the same memory resource. However, nothing prevents the method 220 from being used in another system in which each queue has a separate memory resource.

The minimum and maximum flows for pipes providing traffic to the queue 34 are set, via step 222. The pipes may come from any of the ports A 18 to the enqueuing mechanism 32. In a preferred embodiment, the pipes of interest are behaviour aggregate flows. Thus, step 222 preferably sets the minimum and maximum bandwidth for behaviour aggregate flows of interest. Furthermore, for each egress port, the sum of the minimum guaranteed flows for the pipes should be less than the sending capacity, S, of that port and in a preferred embodiment is less than half of the sending capacity, S, for the port. This is because flows are defined as a fraction of the total amount of traffic which the queue 34 can service. The minimum flow for a pipe can be zero. Typically, the queue 34 has a defined service rate, the rate at which the queue 34 can output items from the queue. Although in a preferred embodiment the maximum number of pipes serviced by the queue 34 is less than or equal to 2248, there is no real upper limit on the number of pipes controlled. In addition, each pipe offers traffic to the queue 34 at an offered rate, $I_i(t)$, where i denotes the $i^{th}$ pipe. Depending on different factors, some of the traffic may be dropped. The transmit fraction for the $i^{th}$ pipe, $T_i(t)$, is the fraction of traffic from the $i^{th}$ pipe which is transmitted to the queue 34. Thus, the instantaneous flow for the $i^{th}$ pipe is $f_i(t) = I_i(t)*T_i(t)$. In a preferred embodiment, the method 100 can also ensure that the pipes having traffic flowing through them have at least their minimum flows.

Once the minimum and maximum flows for the pipes are set, the embedded processor complex may commence controlling traffic through the switch 10, via step 224. The queue level and offered rate for the prior epoch are determined, via steps 226 and 228, respectively. In a preferred embodiment, the queue level is determined at the end of the previous epoch and is the level of the memory resource. Also in a preferred embodiment, the offered rate determined in step 228 is the total offered input to the memory resource during the prior epoch. In a preferred embodiment, the transmit fraction and the global transmit fraction, discussed below, for the prior epoch are also determined in step 226 or step 228. In an alternate embodiment, the determination of the queue level in the method 220 includes determining the level of the queue 34 corresponding to the enqueuing mechanism 32. Also in a preferred embodiment, the transmit fraction and global transmit fraction constant over an epoch and thus can be determined at any time during the previous epoch, but is preferably determined at the start of the previous epoch.

The global transmit fraction is then controlled so that the global transmit fraction and queue level are critically damped over a range of queue levels if the global transmit fraction is used, via step 230. The global transmit fraction is controlled based on the queue level and the offered input. In a preferred embodiment, the global transmit fraction is also controlled based on the prior global transmit fraction. In a preferred embodiment, step 230 calculates a change in the global transmit fraction since the previous epoch in order to provide the desired global transmit fraction for critical damping and adds the change in the global transmit fraction to the global transmit fraction for the previous epoch. The range of queue levels over which the global transmit fraction is so controlled could extend over all possible queue levels. However, in a preferred embodiment, the range over which the global transmit fraction is controlled for critical damping is between a minimum queue level greater than or equal to zero and a maximum queue level less or equal to than the maximum possible queue level.

It is determined whether the queue 34 has excess bandwidth available, via step 232 (Fig 16). In a preferred embodiment, excess bandwidth is determined not to exist if the queue level is increasing. Also in a preferred embodiment, excess bandwidth is determined to exist in step 232 if the queue 34 is empty or if the queue level for the queue 34 is zero, at a low level, or decreasing. Thus, step 232 preferably includes determining a queue level and comparing the queue level to a previous queue level. Also in a preferred embodiment, excess bandwidth is determined not to exist if the queue level is not either zero or decreasing. However, nothing prevents the use of another criteria for determining whether excess bandwidth exists.

If it is determined in step 232 that excess bandwidth exists, then a differential transmit fraction for the pipes is set to allow the flows for the pipes to increase linearly, via step 234. Preferably, step 234 is accomplished by linearly increasing the differential transmit fraction for each of the pipes. The linear increase for a pipe can be based on the minimum flow, the maximum flow, or a weight. Thus, the linear increase for a pipe can be based on the pipe's minimum flow only, the maximum flow only, some combination of a minimum flow and the weight, some combination of the maximum flow and the weight, or some combination of the minimum and maximum flows and the weight. However, in a preferred embodiment, the linear increase for the pipe is based on the minimum flow for the pipe.

If it is determined in step 232 that excess bandwidth does not exist, then the differential transmit fraction is set to allow flows for the pipes to decrease exponentially, via step 236. Preferably, step 236 is accomplished by exponentially decreasing the differential transmit fraction for each pipe. The exponential decrease for a pipe can be based on the minimum flow or the maximum flow. Thus, the exponential decrease for a pipe can be based on the pipe's minimum flow only, the maximum flow only, or some combination of the minimum and maximum flows. However, in a preferred embodiment, the exponential decrease for the pipe is based on the minimum flow for the pipe. Because the decrease is exponential in nature, the decrease is also based on the current flow for the pipe.

The transmit fraction is then set to be the minimum of the global transmit fraction determined in step 230 and the differential transmit fraction determined in either step 234 or 236, via step 238. In one embodiment, step 238 can be performed using the global and differential transmit fractions determined for a previous epoch. In such a case, step 238 may be performed in parallel with steps 226 through 236.

The traffic to the queue 34 is then controlled based on the transmit fraction, via step 240. In a preferred embodiment, step 240 includes discarding packets, either randomly or based on other factors such as the packet priority, to ensure that the transmit fraction set in step 238 is maintained. In another embodiment, discard fractions can be used instead of transmit fraction. Typically, the discard fraction is one minus the transmit fraction.

The scheduler 35 is then used to schedule the removal individual packets from the queue to be sent toward the packets' final destinations, via step 242. The scheduler 35 thus allocates bandwidth for packets leaving the queue 34. In other words, the scheduler 35 allocates turns for frames to be sent from the queue 34. The scheduler 35 determines when packets that are allowed to enter the queue 34 in step 240 are removed from the queue 34 and transmitted toward their final destination. The scheduler 35 thus provides another level of control for traffic through the switch 10.

In a preferred embodiment, the scheduler 35 performs step 242 based on the characteristics of the packet which is presented to the scheduler 35 as well as the available bandwidth of subsequent resources such as a target port (e.g. one of ports B 36). The scheduler 35 will, therefore, schedule each packet so that it can be sent consistent with the requirements for that packet. For example, the scheduler 35 may be presented with a real-time packet. A real-time packet, such as a packet of voice data, may be concerned with the speed of transmission as well as the jitter in the transmission. In addition, the scheduler 35 may take into account the type of service paid for by the client sending or receiving the packet. The type of service may be represented by the minimum and maximum flows for the pipe from which the packet came or by the type of the packet itself. For a real-time packet, the scheduler 35 will schedule the packet in a high priority manner, so that the packet can arrive within the desired time frame. However, the scheduler 35 may also be presented with a data packet, for example one which merely requires best efforts to reach its destination. Best efforts is a cheap, low level of service which merely requires that best efforts of the network be used in sending the packet to its destination. The scheduler 35 may schedule such a packet at a much lower priority so that the packet is sent onward only when there is sufficient bandwidth in the switch 10 to forward the packet.

Use of the global transmit fraction and differential transmit fraction set in step 230 and 234 or 236, respectively, to determine the transmit fraction in conjunction with use of the scheduler in step 242 provides three benefits. First, the method 220 can ensure that the queue 34 does not become full through use of the global transmit fraction as the transmit fraction. Filling of the queue 34 would require dropping of any further packets to be placed in the queue 34, which is undesirable. The global transmit fraction may be selected in step 238 as the transmit fraction when the queue level for the queue 34 is high enough to cause a concern that the queue 34 may become full. Thus, the global transmit fraction is preferably seldom set as the transmit fraction in step 238.

When the global transmit fraction is used as the transmit fraction, critical damping is provided for the system described by the transmit fraction and the queue level. This allows the traffic through the queue 34 and, therefore, the switch 10 to rapidly reach a stable state. This stable state is at a queue level between the minimum and maximum desired queue levels, which can be set to ensure that the queue level never becomes high enough for the queue 34 to be in danger of becoming full. Because critical damping can be provided, the traffic through the queue 34, as described by the queue level and the transmit fraction, should reach the stable state in a minimum amount of time when the global transmit fraction is used.

The method 220 allows for differential services to be provided in a stable manner. Through step 238, the differential transmit fraction will be used in cases where the queue level is not in danger of exceeding a maximum desired queue level. In other words, the differential transmit fraction set in step 234 or 236 will generally be used to provide the transmit fraction in step 238. Because the differential transmit fraction increases flows linearly and decreases flows exponentially, the differential transmit fraction generally ensures that the traffic through pipes to the queue 34 can automatically and asymptotically reach stability. Flows will increase or decrease depending upon whether the queue 34 has excess bandwidth. When stability is reached, flows will linearly increase as long as excess bandwidth exists, then will exponentially decrease, due to the lack of excess bandwidth, until excess bandwidth again becomes available. This behaviour will repeat. In other words, the traffic from the pipes can settle into a steady cyclic state known as a limit cycle. Thus, regardless of the state in which the traffic through the pipes commences, the system will move toward stable cyclic behaviour. This stable behaviour may not be achieved with another combination of increases and decreases. For example, an exponential increase and a linear decrease or an exponential increase and an exponential decrease may not produce stable behaviour. Furthermore, the increase and decrease in the flow for each pipe will depend upon the minimum or maximum flow for the pipe and the previous flow for the pipe. Thus, different pipes may have different levels of flow, or service. Consequently, the differential transmit fraction can not only allocate produce stable behaviour, but can also provide differentiated services and allocate excess bandwidth for the queue 34 fairly. All a network administrator or other user must do is set the minimum and maximum flows for customers differently depending upon the level of service desired for the particular customer. Thus, the method 220 can be used in a variety of applications, such as in networks using DiffServ, by internet service providers desiring to provide different levels of service to different customers or for different media. This is accomplished merely by allowing the minimum and maximum flow to be set for the behaviour aggregate flows, the customers, the media, classes or other flows corresponding to the pipes in the method 220. Thus, the method 220 ensures not only that the queue level is controlled in a stable fashion, but also provides differential services in a stable fashion.

A third benefit of the method 220 is in the use of the scheduler 35 in step 242. Because the transmit fraction is set in step 238 to be the minimum of the global and the differential transmit fractions, the amount of traffic provided to the queue 34 can be controlled. As a result, the scheduler 35 can be provided with a feasible amount of work, which the scheduler 35 can accomplished at a desired rate. In other words, the method 220 may prevent the scheduler 35 from being presented with traffic from the queue at a rate higher than the scheduler 35 can process. This prevents the scheduler 35 from becoming full. As a result, latencies introduced because of the scheduler 35 can be reduced or eliminated. This prevents the formation of a backlog of packets upstream of the scheduler 35 with unpredictable effects on latency, losses, bandwidth allocation and jitter.

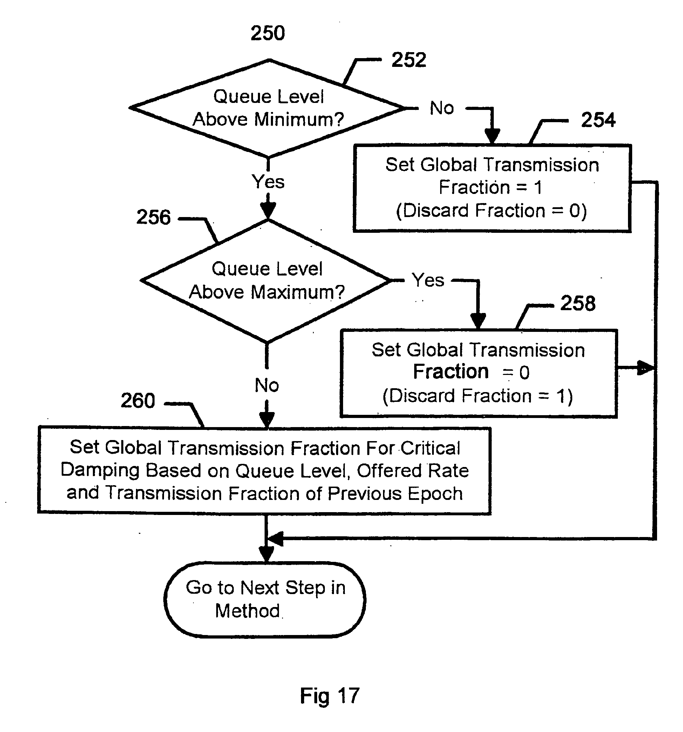

Figure 17 depicts at 250 a more detailed embodiment of steps 230, controlling the global transmit fraction based on the queue level and offered rate. Step 230 commences after the global transmit fraction, queue level and offered rate for the previous epoch have been determined. In a preferred embodiment, the global transmit fraction for the previous epoch was determined in a previous iteration of the method 220. However, the transmit fraction may be determined if not already available. The queue level is preferably determined relative to a minimum queue level, $Q_{min}$, and a maximum queue level, $Q_{max}$, at the end of the epoch.

It is then determined whether the queue level is above $Q_{min}$, via step 252. If not, then the global transmit fraction is set to one, via step 254. Step 254 thus ensures that all packets will be transmitted by the enqueuing mechanism 32 to the queue 34 if the queue level is low enough. If it is determined that the queue level is above $Q_{min}$ in step 252, then it is determined whether the queue level is above $Q_{max}$, via step 256. If the queue level is above $Q_{max}$, then the global transmit fraction is set to zero, via step 258. Thus, step 258 ensures that all packets will be discarded if the queue level is too high.

If the queue level is neither below $Q_{min}$ nor above $Q_{max}$, then the global transmit fraction is controlled for critical damping, via step 260. To more clearly explain the setting as the global transmit fraction, it will be assumed that the offered rate to the queue 34, I(t), and the output rate from the queue 34, O(t), are constant at equilibrium, the stable state. However, the analysis holds true even where I(t) and O(t) continue to vary, as is generally true of a network.

At equilibrium, the rate of change of the queue level with respect to time and the rate of change of the transmission with respect to time should be zero if the output rate and offered rate are constant. In other words, at equilibrium:

$$0 = I(t) * gT(t) - O(t)$$
$$0 = \kappa(t) * (\beta - \alpha\gamma T(t) - Q/Q_{max})$$
$$I(t) = I = \text{constant}$$

$$O(t) = O = \text{constant}$$
$$gT(t) = \text{global transmit fraction}$$

Consequently, at equilibrium,

$$gT = O/I$$
$$\alpha * gT = \beta - Q/Q_{max}$$

For clarity, also assume that at minimum, $Q/Q_{max}$ is a constant, such as 0.25. It is decided that the maximum ratio of I/O that is allowed in the domain of stability is 1.6; at this I/O ratio, Q reaches $Q_{max}$ and T = 5/8. Likewise, it is decided at Q less than or equal to $Q_{max}/4$ that gT should be equal to one. Thus, at these two extreme equilibria:

$$0 = \beta - \alpha * 5/8 - 1 \text{ and}$$
$$= \beta - \alpha - 1/4$$

From these assumptions, the numerical values of and can be determined to be 2 and 2.25, respectively. Note that other tolerances for $Q/Q_{max}$ and I/O can be made to have other numerical values of and. Thus, and can be determined based on equilibrium conditions and some assumptions about the ranges in which the switch 10 is desired to operate. For stability, it can be shown that:

$$\alpha^2 * \kappa^2(t) = 4 * \kappa(t) * I/Q_{max}$$

or

$$\kappa(t) \quad = 4*I/(Q_{max}*\alpha^2) = I(t)/Q_{max} \text{ for the assumptions made above}$$

Thus, (t), $\alpha$ and $\beta$ can be chosen to result in a transmit fraction that will provide critical damping in the values for which the system is desired to operate. Using the equations above, the transmit fraction desired for providing critical damping can be provided for the switch 10. For example, using the assumptions above for $Q/Q_{max}$ and I/O, the system described by the transmit fraction and the queue level are:

```
Q(t + Dt)   =  Q(t) + [I(t)*gT(t) - O(t)]*Dt
gT(t + Dt)  =  gT(t) + (I(t)*Dt/Qmax)*(2.25 - 2*gT(t) -Q(t)/Qmax)*Dt
```

where:

| | |
|---|---|
| Dt | = Time interval between calculations of Q and gT |
| | = Time for an epoch |
| $Q(t)/Q_{max}$ | is greater than or equal to 0.25 |
| I(t)/O(t) | is less than or equal to 1.6 |

In order to account for the situations where the above conditions of Q(t), I(t) and O(t) are violated, the transmit fraction can be changed based on the queue level. For example, the transmit fraction can be made to be one when $Q/Q_{max}$ is less than 0.25. Similarly, when I(t)/O(t) is larger than 1.6, the queue will begin to fill more rapidly than desired. Consequently, the transmit fraction can be set to zero or some small value when the queue reaches a level at or near a maximum value.

Thus, the global transmit fraction is set for critical damping based on the queue level, offered rate and transmit fraction from the previous epoch, as well as the length of the epoch. If the global transmission is used as the transmit fraction, the packets are transmitted or discarded by the enqueuing mechanism 32 so that the fraction of packets provided to the queue 34 is equal to the transmit fraction. The packets are preferably randomly discarded, in a similar manner to what is used in method RED. However, the packets can also be discarded based on their priority. Furthermore, a notification is preferably sent back to the hosts sending the discarded packets so that the hosts can temporarily suspend traffic to the switch 10.

Thus, the global transmit fraction can be set for critical damping using the method 230. Preferably critical damping can occur only in a desired range of queue levels. Outside of this range, the global transmit fraction is set to zero or one, depending on whether the queue level is determined to be too high or too low for a critical damping calculation. Because packets can be discarded randomly or based at least in part on their priority, synchronisation of hosts sending traffic to the switch 10 can be prevented. Because critical damping is provided, the methods 220 and 230 can provide better stability for the system than method RED. The methods 220 and 230 also reach equilibrium more rapidly than method BLUE because critical damping is provided. Consequently, performance of a network using the switch 10 that utilise the method 220 or 230 is improved.

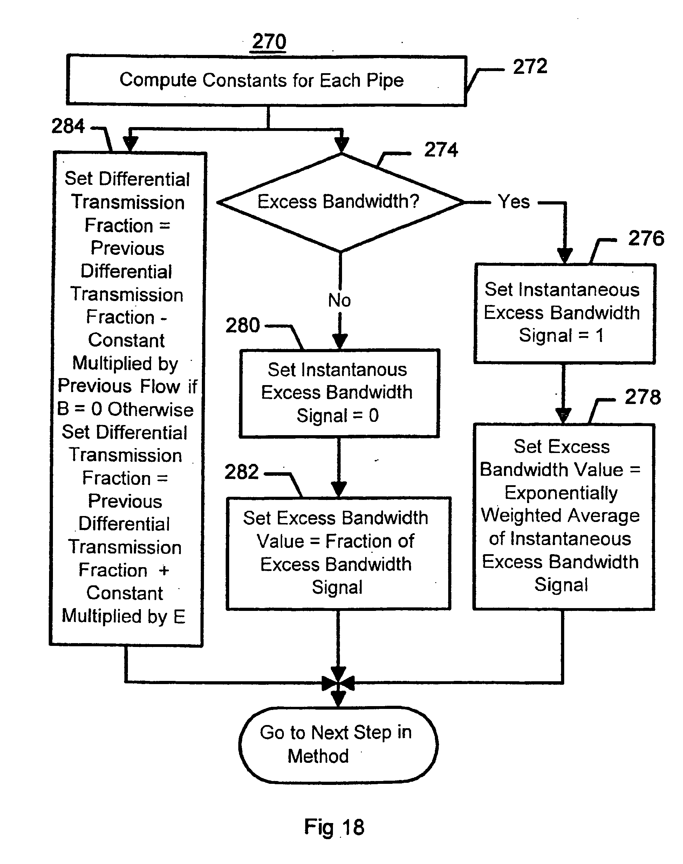

Figure 18 depicts a more detailed flow chart of a method 270 in accordance with the present invention for providing the differential transmit fraction. The method 270 may be used to perform steps 232, 234 and 236 of the method 220 depicted in Figures 15 and 16. Referring back to Figure 18, it is assumed that the queue level, an instantaneous excess bandwidth signal, B, and an excess bandwidth value, E, are already available, preferably from a previous iteration of the method 270. However, if not available, these values should be calculated. In a preferred embodiment, the flows for the prior epoch should also be available.

The method 270 commences after the minimum and maximum flows for each of the pipes being controlled have been set, for example by a network administrator. Constants are computed for each of the pipes based on the minimum and maximum flows for the pipe, via step 272. For each pipe, i, a constant $C_i$ and a constant $D_i$ are computed in step 272. The constant $C_i$ is used for linearly increasing the flow for pipe i, as discussed below. Similarly, the constant $D_i$ is used for exponentially decreasing the flow for the pipe i, as discussed below. In a preferred embodiment, the constants $C_i$ and $D_i$ are both based on the minimum flows. In an alternate embodiment, weights for different pipes can also be provided. In such a case, the constant $C_i$ and $D_i$ may also be calculated based on the weights provided.

Constants for increasing or decreasing the flows for the pipes are determined based on the minimum flows and, where used, the weights. Preferably, the constant for increasing the flow, $C_i$, and the constant for decreasing the flow, $D_i$, of a pipe are calculated as follows:

$$C_i = (W_i/W)*(S + f_{imin} - \sum_j f_{jmin})/16$$

If all of the weights are equal to one, as in a preferred embodiment, then:

$$C_i = (S + f_{imin} - \Sigma S\ f_{jmin})/16$$

$$D_i = (S - f_{imin})*4$$

where:

$W_i$ = weight for the $i^{th}$ pipe, which is preferably in the range [0,1]
$W$ = sum of all N weights
$f_{imin}$ = minimum flow for the $i^{th}$ pipe

In addition, the flow units are again chosen so that Dt is one and $Q_{max}$ is one.

Once the constants are determined, traffic is allowed to flow through the pipes to the queue 34. It is determined whether excess bandwidth exists, via step 274. In a preferred embodiment, excess bandwidth is determined to exist only if the queue level for the queue 34 is zero or is decreasing. Otherwise it will be determined that excess bandwidth does not exist. However, nothing prevents the use of another criteria for determining whether excess bandwidth exists. In a preferred embodiment, the queue level determined is the level for the entire memory resource. However, nothing prevents the queue level being determined for a logical queue or subqueue. If excess bandwidth does not exist, then an instantaneous excess bandwidth signal, B, is set to zero, via step 280. The signal B is termed instantaneous because it is based upon a single measurement of the queue level and a single determination of the change in the queue level. An excess bandwidth value, E, is then set to be a constant, preferably 31/32, times its previous value plus one minus the same constant, preferably 1/32, times B, via step 282. Thus, in a preferred embodiment, the excess bandwidth value E is the exponentially weighted average of the instantaneous excess bandwidth signal B. The excess bandwidth value is appropriately set in step 282 because the instantaneous excess bandwidth signal is zero.

If it is determined in step 274 that excess bandwidth does exist, then the instantaneous excess bandwidth signal is set to one, via step 276. The excess bandwidth value E is then set to an exponentially weighted average of the instantaneous excess bandwidth signal, via step 278. Thus, in a preferred embodiment, the excess bandwidth value is a first constant multiplied by a previous excess bandwidth value plus a second constant multiplied by the instantaneous excess bandwidth signal. The first and second constant may both be less than one and are preferably 31/32 and 1/32, respectively. In a preferred embodiment, the exponentially weighted bandwidth value is set to be:

$$E(t + Dt) = (31/32)*E(t) + B(t)/32$$

Where:

$E(t + Dt)$ = Excess bandwidth value for current epoch
$E(t)$ = Excess bandwidth value for previous epoch
$B(t)$ = Instantaneous excess bandwidth signal for the previous epoch

In a preferred embodiment, the differential transmit fraction for each pipe i is set, via step 284, in parallel with the steps 274 through 282. However, in an alternate embodiment, the differential transmit fraction can be updated serially with the instantaneous excess bandwidth signal and the excess bandwidth value. If the previous instantaneous excess bandwidth signal, B, was one (excess bandwidth available), then step 284 would set the differential transmit fraction for each pipe i based on the previous differential transmit fraction, the constant $C_i$, and the excess bandwidth value. Preferably, the differential transmit fraction set in step 184 for excess bandwidth previously existing is:

$$T_i(t + Dt) = T_i(t) + C_i*E(t)$$

Where:

Dt   = Length of an epoch (time since transmit fraction last calculated)

$T_i(t)$   = Differential transmit fraction for the previous epoch (time t) for the $i^{th}$ pipe

Preferably, the flow units are set so that Dt and the maximum possible queue level, $Q_{max}$, are one. Thus, the differential transmit fraction linearly decreases. Furthermore, the differential transmit fraction will continue to linearly increase as long as excess bandwidth continues to exist. If excess bandwidth did not exists in the previous epoch (B was zero), then in step 284 the differential transmit fraction, $T_i(t + Dt)$ for each pipe i is then set based on a previous differential transmit fraction for the pipe, $T_i(t)$, $D_i$, and the previous flow for the pipe, $f_i(t)$ . The differential transmit fraction when excess bandwidth did not previously exist is preferably given by:

$$T_i(t + Dt) = T_i(t) - D_i * f_i(t)$$

Thus, the differential transmit fraction set in step 284 ensures that the differential transmit fraction and, therefore, the flow will exponentially decrease as long as excess bandwidth continues not to exist.

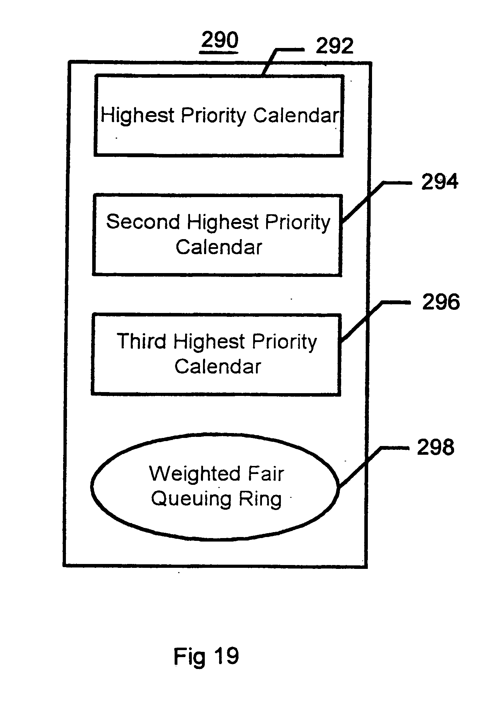

Figure 19 depicts a preferred embodiment of a scheduler 290 used with the present invention. The scheduler 290 is thus preferably used as the scheduler 21, 25, 29, 35, particularly scheduler 35. The scheduler 290 includes calendars 292, 294 and 296 as well as a weighted fair queuing ring ("ring") 298. However, note that other schedulers (not shown) could be used with the present invention. For example, one or more FIFOs, which is simpler than the scheduler 290 might be used. In another embodiment, an EDF (earliest deadline first) scheduler, which reviews the deadline of each packet and places the packet having the earliest deadline first in line to be sent might be used. Similarly, in yet another embodiment, another scheduler might be used. In general, whatever scheduler is used, it may be presumed that the scheduler repeatedly accomplishes some desired policy or combination of policies by repeatedly choosing the next packet to send. In one preferred embodiment, the policies might be simple and scheduling might be accomplished by two FIFO mechanisms (one for real-time traffic with absolute priority and the other for all other traffic, served only when the first FIFO is empty). Alternatively, in an alternate preferred embodiment, several policies entailing sustained send rate, peak send rate, maximum burst size and jitter limits might be enforced by a sophisticated scheduler. In all cases, the scheduler itself does not exert flow control, the purposeful dropping of low value packets during congestion. Instead, the upstream flow control mechanism described above, which uses the global and differential transmit fractions, provides flow control while serving the competing goals of simplicity, robustness, stability, fair bandwidth allocation, low drop rates, low buffer occupancy and high utilisation.

Each calendar 292, 294 and 296 functions as discussed previously. Thus, each calendar 292, 294 and 296 has a particular number of positions. Note that the number of positions in one calendar 292, 294 or 296 may be different from the number of positions in another calendar 292, 294 or 296. Each position can hold exactly zero or one packet to be sent. In the context of this disclosure, a scheduler, such as the scheduler 290, a calendar 292, 294 or 296 or a ring 298 will be described as having a packet. However, the scheduler 290, calendar 292, 294 or 296 and ring 298 preferably use an identifier for the packet, rather than the packet itself.

Each calendar 292, 294 or 296 spends a particular amount of time in each position. In a preferred embodiment, the calendar 292 is a low latency calendar and thus has the highest priority of the calendars 292, 294 and 296. The calendar 294 is a normal latency calendar and thus has the second highest priority of the calendars 292, 294 and 296. The calendar 296 is a peak rate calendar and thus has the lowest priority of the calendars 292, 294 296. In a preferred embodiment, therefore, the time spent in each position for the calendar 292 is less than the time spent in each position for the calendar 294. Similarly, the time spent in each position for the calendar 294 is less than the time spent in each position for the calendar 296. The calendars 292, 294 and 296 are thus used for scheduling highest, normal and lowest priority packets. By traversing the positions in each of the calendars 292, 294 and 296, the scheduler 220 ensures that packets are sent from the corresponding queue, such as the queue 16, consistent with the priority of packet.

The ring 298 is preferably used for scheduling the lowest priority packets. Thus, a packet placed in the ring 298 has a lower priority than a packet placed in one of the calendars 292, 294 and 296. The ring 298 is preferably work conserving. Thus, over a particular amount of time, the ring 228 will do a constant amount of work as long as the ring 298 is not empty. The ring 298 also has a particular number of positions. Each position in the ring 298 can hold exactly zero or one packet. However, when the ring 298 is traversed, the ring 228 goes directly to the next occupied position, skipping any positions which are not occupied. As a result, the ring 298 is work conserving.

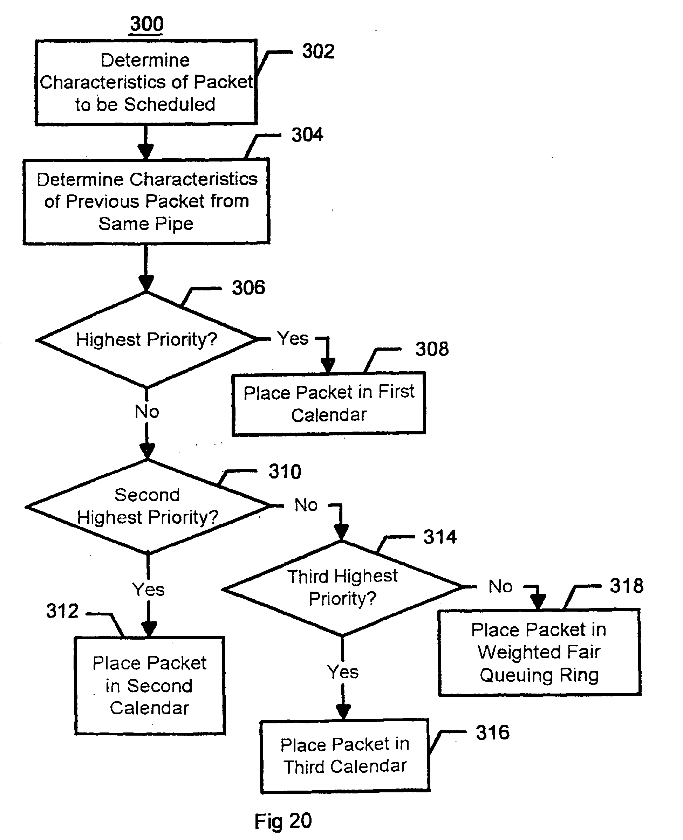

Figure 20 depicts a simplified flow chart of one embodiment of a method 300 for scheduling packets using the scheduler 290. The characteristics, such as the type, of the packet to be scheduled is determined, via step 302. The type of packet to be scheduled could be based in part on the kind of data carried by the packet, for example real time data such as video versus pure data such as an email. In addition, the type of pipe from which the packet came can also be considered. For example, in one embodiment, the type of pipes generally available are expedited forwarding (EF), best efforts (BE) and assured forwarding (AF). Typically, an EF pipe carries real time traffic. An EF pipe allows traffic to flow up to a guaranteed maximum flow rate and thus provides a high, and relatively expensive, level of service. Traffic carried by the EF pipe above the guaranteed maximum flow rate may be discarded. Thus, traffic for an EF pipe is likely to be mapped to a high priority calendar, such as the calendar 292, but might also be mapped to the calendars 294 and 296. A BE typically carries low priority traffic, such as data packets. A BE pipe typically carries traffic using resources of the network that are available after higher priority traffic has been allocated at least its minimum bandwidth. Traffic for a BE pipe may thus be mapped to the ring 298. An AF pipe has a guaranteed minimum rate, for which a customer typically pays a premium price. However, the AF pipe may be allocated some portion of any excess resources, or bandwidth, available in the network. Traffic for the AF pipe may thus be mapped to some combination of the calendars 292, 294 and 296 and the ring 298.

In a preferred embodiment, the characteristics, such as the type, of the previous packet from the same pipe (the corresponding pipe) as the packet to be scheduled is also determined, via step 304. It is then determined whether the packet to be scheduled is of the highest priority, via step 306. The "highest priority" considered in step 306 could be a range of high priorities. In addition, the determination of the priority of the packet could take into account the priority of the previous packet and the flow rate for the corresponding pipe. For example, if a packet has a high priority such as a real time packet, but it is indicated that the corresponding pipe has a flow which is higher than the guaranteed rate, the packet may not be considered to be of the highest priority. If the packet is of the highest priority, then the packet is placed in a position in the calendar 292, via step 308. In one embodiment, the position in which the packet is placed takes into account the priorities of some number of the other packets within the calendar 292. In one embodiment, the packet is placed in an open position in the calendar 292. However, in an alternate embodiment, the packet might be placed in an occupied position and the packet from that occupied position moved to another position.

If the packet is not of the highest priority, then it is determined whether the packet is of the second highest priority, via step 310. The "second highest priority" considered in step 310 could be a range of priorities. In addition, the determination of the priority of the packet could take into account the priority of the previous packet and the flow rate for the corresponding pipe. If the packet is of the second highest priority, then the packet is placed in a position in the calendar 294 having the second highest priority, via step 312. In one embodiment, the position in which the packet is placed takes into account the priorities of some number of the other packets within the calendar 294. In one embodiment, the packet is placed in an open position in the calendar 294. However, in an alternate embodiment, the packet might be placed in an occupied position and the packet from that occupied position moved to another position.

If the packet is not of the second highest priority, then it is determined whether the packet is of the third highest priority, via step 314. The "third highest priority" considered in step 314 could be a range of priorities. In addition, the determination of the priority of the packet could take into account the priority of the previous packet and the flow rate for the corresponding pipe. If the packet is of the third highest priority, then the packet is placed in a position in the calendar 296 having the third highest priority, via step 316. In another embodiment, the position in which the packet is placed takes into account the priorities of some number of the other packets within the calendar 296. In one embodiment, the packet is placed in an open position in the calendar 296. However, in an alternate embodiment, the packet might be placed in an occupied position and the packet from that occupied position moved to another position.

If the packet is not of the third highest priority, then the packet is placed in a position in the ring 298, via step 318. In one embodiment, the position in which the packet is placed takes into account the priorities of some number of the other packets within the ring 298. In one embodiment, the packet is placed in an open position in the ring 298. However, in an alternate embodiment, the packet might be placed in an occupied position and the packet from that occupied position moved to another position. In a preferred embodiment, step 318 takes into account the size of the previous packet from the same pipe in placing the packet in the ring 298. For example, if no previous packet exists, then the packet is preferably placed in the most remote unoccupied position of the ring 298. However, if the previous packet from the same pipe was large, then the packet is preferably placed at a more remote unoccupied position. If the previous packet from the same pipe was small, then the packet is preferably placed at a closer unoccupied position in the ring 298. Thus, a pipe sending larger packets will have fewer turns (positions) for each traversal of the ring 298. The placement of packets is preferably based partially on the size of a previous packet from the same pipe in order to ensure that the ring 298 does work on different pipes at approximately the same rate.

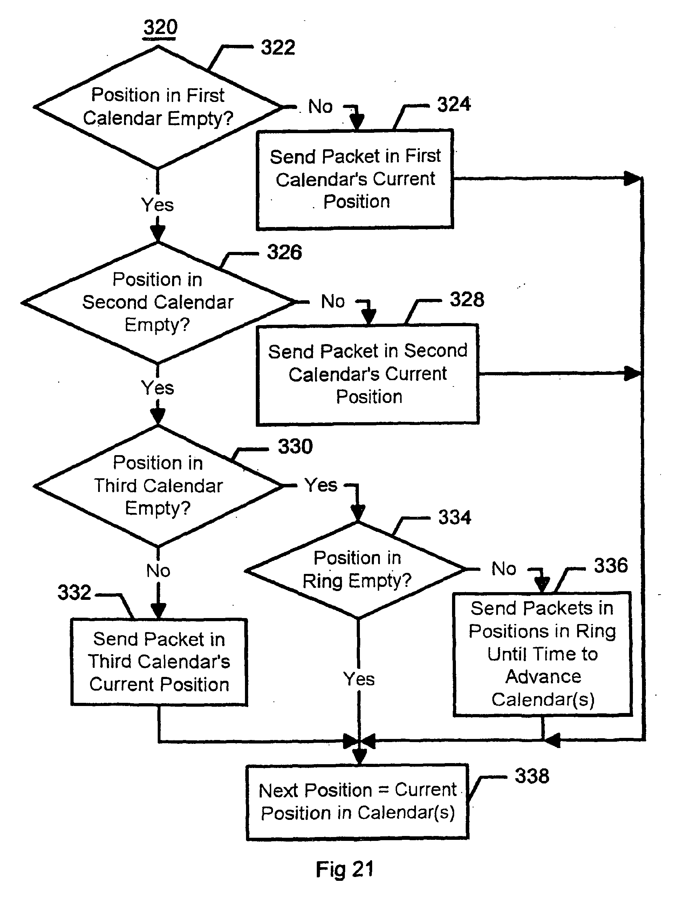

Figure 21 is a flow chart depicting one embodiment of a method 320 for sending packets from the corresponding queue based on the packets' positions in the calendars 292, 294 and 296 and the ring 298. In general, the scheduler 290 will send packets from the calendar 292 more rapidly from the calendar 294. The scheduler 290 will also send packets from the calendar 294 more rapidly from the calendar 296. The scheduler 290 will also send packets from the calendar 296 more rapidly from the ring 298. Thus, packets scheduled using the calendars 292, 294 and 296 are preferably sent before a packet scheduled in the ring 298.

It is determined whether a current position in the highest priority calendar 292 is empty, via step 322. If the current position is not empty, then the packet in the current position for the calendar 292 is removed from the queue and sent to the next portion of the switch, via step 324. If the current position in the calendar 292 is empty, then it is determined whether a current position in the second highest priority calendar 294 is empty, via step 326. If the current position in the calendar 294 is not empty, then the packet in that position is removed from the queue and sent to the next portion of the switch, via step 328. If the current position in the calendar 294 is empty, it is determined whether a current position in the third highest priority calendar 296 is empty, via step 330. If the current position in the calendar 296 is not unoccupied, then the packet in the calendar 296 is removed from the queue and sent to the next portion of the switch, via step 332. If the current position in the calendar 296 is unoccupied, then it is determined whether a current position in the ring 298 is empty (step 334). If not, then packets corresponding to positions in the ring 298 are removed from the queue and sent to the next portion of the switch (step 336) until it is time to move to the next position in one of the calendars 292, 294, or 296. Preferably, this occurs when the next position in the calendar 292 is to become the current position. This is because the highest priority calendar 292 preferably spends the shortest amount of time in each position.

The next position in the calendar or calendars is then made the current position in the calendar, via step 338. Regardless of which portion of the scheduler 290 sends the packet, at least one of the calendars is advanced. In a preferred embodiment, step 338 advances at least the calendar 292 to the next position. Also in a preferred embodiment, the calendars 294 and 296 advance to their next position at multiples of the time in which the calendar 292 advances to the next position. For example, in one embodiment, the calendar 294 advances to the next position each time the calendar 292 has advanced to the next position five hundred and twelve times. Thus, in a preferred embodiment, step 338 may advance multiple calendars 292, 294 and 296 to the next position. The method 320 may then be repeated. Thus, using the methods 300 and 320, the flow of traffic and sustained and peak rates and burst sizes are treated is desired. If the rate of flow of traffic is at or below the sustained rate, then packets are allowed to enter the high priority calendar 292 at regular intervals. If the rate of flow of traffic is above the sustained rate but below the peak rate, then for a time that is determined by the burst size, packets are still scheduled in the higher priority calendars 292, 294 and 296. If the traffic remains above the sustained rate and below the peak rate for a longer time, then packets are entered into the ring 298, which ensures only best efforts are used to send the packets. If the flow later falls back to at or below the guaranteed, or sustained rate, then packets may once again be scheduled in the high priority calendar. Packets are then removed from queue using the calendars 292, 294 and 296 and the ring 298 and the method 320.

Thus, the scheduler 290 schedules the removal of individual packets from the queue, such as the queue 34, from different pipes based on characteristics of the packets as well as characteristics of the pipe from which the packet came, such as the characteristics of a previous packet from the pipe. As a result, the scheduler 290 can finely control traffic through the switch.

Thus, using the methods described above, traffic through and the switch 10 can be controlled. It may be assured that memory resources of the switch will not be exhausted, for example through the use of the global transmit fraction. In particular, the queue level for a particular memory resource can be driven to be a small value in most situations. A small queue level ensures not only that the queue will not be exhausted, but also that jitter and other undesirable phenomenon due in part to a filled or nearly filled queue can be reduced or avoided. In addition, differentiated services can be provided, for example through the use of the differential transmit fraction. Thus, different customers can be provided with different levels of services. In addition, a scheduler can ensure that traffic is controlled at the packet level. Furthermore, use of the scheduler and the methods described can ensure that the scheduler is provided with a feasible amount of work to accomplish. Thus, additional latencies due to the scheduler may be reduced or eliminated.

Methods and systems have been disclosed for controlling traffic through a network. Software written to implement the present invention is to be stored in some form of computer-readable medium, such as memory, CD-ROM or transmitted over a network, and executed by a processor. Alternatively, some or all of the present invention could be implemented in hardware. Although the present invention has been described in accordance with the embodiments shown, one of ordinary skill in the art will readily recognise that there could be variations to the embodiments and those variations would be within the scope of the present invention. Accordingly, many modifications may be made by one of ordinary skill in the art without departing from the scope of the appended claims.

## Claims

1. A method comprising the steps of:

     (a) controlling the flow of a plurality of packets moving through a queue in a computer network;
     (b) determining (92) a queue level for the queue;
     **characterised in that** the method further comprises the steps of:
     (c) determining (92) an offered rate of the plurality of packets to the queue; and

(d) controlling (94,96) a transmission fraction of the plurality of packets to the queue based on the queue level and the offered rate, the transmission fraction and the queue level being critically damped (112, 152) if the queue level is between at least a first queue level and a second queue level, the change in the transmission fraction with respect to time being set to be equal to a first quantity multiplied by a second quantity, the first quantity being dependent upon time, the second quantity being a first constant minus a second constant multiplied by the transmission fraction minus the queue level divided by a maximum possible queue level.

2. A method according to Claim 1 wherein the queue has a maximum queue level that is possible and further comprising the step of:

(e) determining (124) a virtual maximum queue level based on the determined queue level and the maximum queue level.

3. A method according to claim 1 further comprising:

(e) defining a plurality of pipes which use the queue;
(f) setting (172) a minimum flow and a maximum flow for each of the plurality of pipes;
(g) determining (178) if excess bandwidth exists for the queue; and
(h) linearly increasing (184) a flow for a pipe based on one of the minimum flow and the maximum flow if excess bandwidth exists and if the flow for the pipe of the plurality of pipes is less than the maximum flow for the pipe; or
(i) exponentially decreasing (180) the flow for the pipe based on one of the minimum flow and the maximum flow if excess bandwidth does not exist and the flow is greater than the minimum flow for the pipe, such that the traffic through the queue is stable.

4. A method according to Claim 3 wherein said step (d) of controlling a transmission fraction controls a global transmit fraction and comprising the further steps of:

(j) setting (238) a transmit fraction for a flow for a pipe of the plurality of pipes to be a minimum of the global transmit fraction and a differential transmit fraction, the differential transmit fraction capable of linearly increasing the flow based on the minimum flow or the maximum flow if excess bandwidth exists and if the flow for the pipe of the plurality of pipes is less than the maximum flow for the pipe and capable of exponentially decreasing the flow for the pipe of the plurality of pipes based on the minimum flow or the maximum flow if excess bandwidth does not exist and the flow is greater than the minimum flow for the pipe, such that the traffic through the queue is stable;
(k) controlling (240) transmission of traffic to the queue based on the transmit fraction; and
(l) utilising (242) a scheduler to control traffic from the queue

5. Apparatus comprising:

a queue for storing a portion of a flow of a plurality of packets moving through a computer network;

**characterised in that** the apparatus further comprises:

an enqueuing mechanism, coupled with the queue, for receiving an offered rate of the plurality of packets and for controlling (94,96) a transmission fraction of the plurality of packets to the queue, the transmission rate being controlled based on a queue level for the queue and the offered rate so that the transmission fraction and the queue level are critically damped (112, 152) if the queue level is between at least a first queue level and a second queue level, the change in the transmission fraction with respect to time being set to be equal to a first quantity multiplied by a second quantity, the first quantity being dependent upon time, the second quantity being a first constant minus a second constant multiplied by the transmission fraction minus the queue level divided by a maximum possible queue level.

6. Apparatus according to Claim 5 wherein said enqueuing mechanism is adapted to determine (124) a virtual maximum queue level based on a queue level for the queue and the maximum queue level, the enqueuing mechanism is adapted to control the transmission rate based on the queue level for the queue, the offered rate and the virtual maximum queue level.

7. Apparatus according to Claim 5 wherein the queue is used by a plurality of pipes through which traffic is transmitted and further wherein the enqueuing mechanism is adapted to use a minimum flow and a maximum flow set (172) for each of the plurality of pipes by a user, the enqueuing mechanism is adapted to determine (178) if excess bandwidth exists for the queue and (a) linearly increasing (184) a flow for a pipe of the plurality of pipes based on the minimum flow or the maximum flow if excess bandwidth exists and if the flow for the pipe of the plurality of pipes is less than the maximum flow for the pipe or (b) exponentially decreasing (180) the flow for the pipe of the plurality of pipes based on the minimum flow or the maximum flow if excess bandwidth does not exist and the flow is greater than the minimum flow for the pipe, such that the traffic through the queue is stable.

8. Apparatus according to claim 7 wherein the enqueuing mechanism is adapted to control a global transmit fraction of the plurality of packets to the queue, based on the queue level and the offered rate, so that the global transmit fraction and the queue level are critically damped if the queue level is between at least a first queue level and a second queue level, and the enqueuing mechanism is also adapted to set (238) a transmit fraction for a flow for a pipe of the plurality of pipes to be a minimum of the global transmit fraction and a differential transmit fraction, the differential transmit fraction capable of linearly increasing the flow based on the minimum flow or the maximum flow if excess bandwidth exists and if the flow for the pipe of the plurality of pipes is less than the maximum flow for the pipe and capable of exponentially decreasing the flow for the pipe of the plurality of pipes based on the minimum flow or the maximum flow if excess bandwidth does not exist and the flow is greater than the minimum flow for the pipe, such that the traffic through the queue is stable, and the enqueuing mechanism is also adapted to control (240) transmission of traffic to the queue based on the transmit fraction; and further comprising:

a scheduler to control traffic from the queue.

9. A computer-readable medium containing a computer executable program comprising instructions for

(a) determining (92) a queue level for a queue through which pass a plurality of packets flowing in a computer network;
**characterised in that** the method further comprises the steps of:
(b) determining (92) an offered rate of the plurality of packets to the queue; and
(c) controlling (94,96) a transmission fraction of the plurality of packets to the queue based on the queue level and the offered rate, the transmission fraction and the queue level being critically damped (112, 152) if the queue level is between at least a first queue level and a second queue level, the change in the transmission fraction with respect to time being set to be equal to a first quantity multiplied by a second quantity, the first quantity being dependent upon time, the second quantity being a first constant minus a second constant multiplied by the transmission fraction minus the queue level divided by a maximum possible queue level.

10. The computer readable medium of Claim 9 further comprising instructions for (d) determining (124) a virtual maximum queue level based on the queue level and the maximum queue level and further wherein the transmission fraction controlling instruction is based on the queue level, the offered rate, and the virtual maximum queue level.

11. The computer readable medium of Claim 9 further comprising instructions for

(d) allowing a minimum flow and a maximum flow to be set (172) for each of a plurality of pipes which use the queue;
(e) determining (178) if excess bandwidth exists for the queue; and
(f) linearly increasing (184) a flow for a pipe of the plurality of pipes based on the minimum flow or the maximum flow if excess bandwidth exists and if the flow for the pipe of the plurality of pipes is less than the maximum flow for the pipe or exponentially decreasing (180) the flow for the pipe of the plurality of pipes based on the minimum flow or the maximum flow if excess bandwidth does not exist and the flow is greater than the minimum flow for the pipe, such that the traffic through the queue is stable.

12. The computer readable medium of Claim 11 wherein the transmission fraction controlling instructions (c) control a global transmit function and further comprising instructions for:

(g) allowing a minimum flow and a maximum flow to be set for each of the plurality of pipes;
(h) determining if excess bandwidth exists for the queue;
(i) determining a queue level for the queue;
(j) determining an offered rate of the plurality of packets to the queue;
(k) controlling a global transmit fraction of the plurality of packets to the queue, based on the queue level and the offered rate, so that the global transmit fraction and the queue level are critically damped if the queue level is between at least a first queue level and a second queue level;

(l) setting (238) a transmit fraction for a flow for a pipe of the plurality of pipes to be a minimum of the global transmit fraction and a differential transmit fraction, the differential transmit fraction capable of linearly increasing the flow based on the minimum flow or the maximum flow if excess bandwidth exists and if the flow for the pipe of the plurality of pipes is less than the maximum flow for the pipe and capable of exponentially decreasing the flow for the pipe of the plurality of pipes based on the minimum flow or the maximum flow if excess bandwidth does not exist and the flow is greater than the minimum flow for the pipe, such that the traffic through the queue is stable;

(m) controlling (240) transmission of traffic to the queue based on the transmit fraction; and

(n) utilising (242) a scheduler to control traffic from the queue.

## Patentansprüche

1. Verfahren, das die folgenden Schritte umfasst:

   (a) Steuern des Flusses einer Vielzahl von Datenpaketen, die eine Warteschlange in einem Computernetzwerk durchlaufen;
   (b) Ermitteln (92) eines Warteschlangenfiillstandes für die Warteschlange;
   **dadurch gekennzeichnet, dass** das Verfahren ferner die folgenden Schritte umfasst:
   (c) Ermitteln (92) einer angebotenen Rate der Vielzahl von Datenpaketen an die Warteschlange; und
   (d) Steuern (94, 96) eines Übertragungsanteils der Vielzahl von Datenpaketen an die Warteschlange auf der Grundlage des Warteschlangenfüllstandes und der angebotenen Rate, wobei der Übertragungsanteil und der Wartungsschlangenfüllstand kritisch gedämpft (112, 152) werden, wenn der Warteschlangenfiillstand zwischen mindestens einem ersten Warteschlangenfüllstand und einem zweiten Warteschlangenfüllstand liegt, wobei die Änderung des Übertragungsanteils hinsichtlich der Zeit so festgelegt wird, dass sie gleich einem ersten Betrag, multipliziert mit einem zweiten Betrag ist, wobei der erste Betrag abhängig von der Zeit ist, wobei der zweite Betrag eine erste Konstante, minus einer zweiten Konstante, multipliziert mit dem Übertragungsanteil, minus dem Warteschlangenfüllstand, dividiert durch einen höchstmöglichen Warteschlangenfüllstand ist.

2. Verfahren nach Anspruch 1, wobei die Warteschlange einen höchstmöglichen Warteschlangenfüllstand aufweist und weiterhin die folgenden Schritte umfasst:

   (e) Ermitteln (124) eines virtuellen höchstmöglichen Warteschlangenfiillstandes auf der Grundlage des ermittelten Warteschlangenfüllstandes und des höchstmöglichen Warteschlangenfiillstandes.

3. Verfahren nach Anspruch 1, das ferner Folgendes umfasst:

   (e) Definieren einer Vielzahl von Verbindungen, welche die Warteschlange nutzen;
   (f) Festlegen (172) eines kleinstmöglichen Datenflusses und eines größtmöglichen Datenflusses für jede der Vielzahl von Verbindungen;
   (g) Ermitteln (178), ob überschüssige Bandbreite für die Warteschlange vorhanden ist; und
   (h) lineares Erhöhen (184) eines Datenflusses für eine Verbindung auf der Grundlage eines kleinstmöglichen Datenflusses und eines größtmöglichen Datenflusses, wenn überschüssige Bandbreite vorhanden ist und wenn der Datenfluss für die Verbindung aus der Vielzahl von Verbindungen geringer als die größtmögliche Datenrate für die Verbindung ist; oder
   (i) exponentielles Absenken (180) des Datenflusses für die Verbindung auf der Grundlage eines kleinstmöglichen Datenflusses und eines größtmöglichen Datenflusses, wenn keine überschüssige Bandbreite vorhanden ist und der Datenfluss größer als der kleinstmögliche Datenfluss für die Verbindung ist, so dass der Datenverkehr durch die Warteschlange stabil ist.

4. Verfahren nach Anspruch 3, wobei Schritt (d) des Steuerns eines Übertragungsanteils einen Gesamtübertragungsanteil steuert und weiter die folgenden Schritte umfasst:

   (j) Festlegen (238) eines Übertragungsanteils für einen Datenfluss für eine Verbindung aus der Vielzahl von Verbindungen als Mindestwert des Gesamtübertragungsanteils und eines Differenzübertragungsanteils, wobei der Differenzübertragungsanteil in der Lage ist, den Datenfluss auf der Grundlage des kleinstmöglichen Datenflusses oder des größtmöglichen Datenflusses linear zu erhöhen, wenn überschüssige Bandbreite vorhanden ist und wenn der Datenfluss für die Verbindung aus der Vielzahl von Verbindungen geringer als der größtmögliche Datenfluss für die Verbindung ist, sowie in der Lage ist, den Datenfluss für die Verbindung aus der Vielzahl von Verbindungen auf der Grundlage des kleinstmöglichen Datenflusses oder des größtmöglichen Datenflusses exponentiell abzusenken, wenn keine überschüssige Bandbreite vorhanden ist und der Datenfluss größer als der kleinstmögliche Datenfluss für die Verbindung ist, so dass der Datenverkehr durch die Warteschlange stabil ist;

(k) Steuern (24) der Übertragung von Datenverkehr an die Warteschlange auf der Grundlage des Übertragungsanteils; und

(l) Nutzen (242) einer Zeitsteuerungseinheit, um Datenverkehr von der Warteschlange zu steuern.

5. Vorrichtung, die Folgendes umfasst:

eine Warteschlange, um einen Anteil eines Flusses einer Vielzahl von Datenpaketen, die sich durch ein Computernetzwerk bewegen, zu steuern;

**dadurch gekennzeichnet, dass** die Vorrichtung weiter Folgendes umfasst:

einen mit der Warteschlange verbundenen Einreihungsmechanismus, um eine angebotene Rate der Vielzahl von Datenpakten zu empfangen und einen Übertragungsanteil der Vielzahl von Datenpaketen an die Warteschlange zu steuern (94, 96), wobei die Übertragungsrate auf der Grundlage eines Warteschlangenfiillstandes für die Warteschlange und die angebotene Rate gesteuert wird, so dass der Übertragungsanteil und der Warteschlangenfiillstand kritisch gedämpft (112, 152) werden, wenn der Warteschlangenfiillstand mindestens zwischen einem ersten Warteschlangenfiillstand und einem zweiten Warteschlangenfüllstand liegt, wobei die Änderung des Übertragungsanteils hinsichtlich der Zeit so festgelegt wird, dass sie gleich einem ersten Betrag, multipliziert mit einem zweiten Betrag ist, wobei der erste Betrag abhängig von der Zeit ist, wobei der zweite Betrag eine erste Konstante, minus einer zweiten Konstante, multipliziert mit dem Übertragungsanteil, minus dem Warteschlangenpegel, dividiert durch einen höchstmöglichen Warteschlangenfüllstand ist.

6. Vorrichtung nach Anspruch 5, wobei der Einreihungsmechanismus so gestaltet ist, dass er einen virtuellen größtmöglichen Warteschlangenfiillstand auf der Grundlage eines Warteschlangenfüllstandes für die Warteschlange und des größtmöglichen Warteschlangenfüllstandes ermittelt (124), wobei der Einreihungsmechanismus so gestaltet ist, dass er die Übertragungsrate auf der Grundlage des Warteschlangenfüllstandes für die Warteschlange, die angebotene Rate und des virtuellen größtmöglichen Warteschlangenfüllstandes steuert.

7. Vorrichtung nach Anspruch 5, wobei die Warteschlange von einer Vielzahl von Verbindungen genutzt wird, durch die Datenverkehr übertragen wird, und wobei der Einreihungsmechanismus ferner so gestaltet ist, dass er einen kleinstmöglichen Datenfluss und einen größtmöglichen Datenfluss, die von einem Benutzer für jede aus der Vielzahl von Verbindungen festgelegt (172) werden, nutzt, und wobei der Einreihungsmechanismus weiterhin so gestaltet ist, dass er ermittelt (178), ob überschüssige Bandbreite für die Warteschlange vorhanden ist und (a) einen Datenfluss für eine Verbindung aus der Vielzahl von Verbindungen auf der Grundlage des kleinstmöglichen Datenflusses oder des größtmöglichen Datenflusses linear erhöht (184), wenn überschüssige Bandbreite vorhanden ist und wenn der Datenfluss für die Verbindung aus der Vielzahl von Verbindungen kleiner als der größtmögliche Datenfluss für die Verbindung ist, oder (b) den Datenfluss für die Verbindung aus der Vielzahl von Verbindungen auf der Grundlage des kleinstmöglichen Datenflusses oder des größtmöglichen Datenflusses exponentiell absenkt (180), wenn keine überschüssige Bandbreite vorhanden ist und der Datenfluss größer als der kleinstmögliche Datenfluss für die Verbindung ist, so dass der Datenverkehr durch die Warteschlange stabil ist.

8. Vorrichtung nach Anspruch 7, wobei der Einreihungsmechanismus so gestaltet ist, dass er einen Gesamtübertragungsanteil der Vielzahl von Datenpaketen an die Warteschlange auf der Grundlage des Warteschlangenfiillstandes und der angebotenen Rate steuert, so dass der Gesamtübertragungsanteil und der Warteschlangenfiillstand kritisch gedämpft werden, wenn der Warteschlangenfiillstand zwischen mindestens einem ersten Warteschlangenfiillstand und einem zweiten Warteschlangenfiillstand liegt, und wobei der Einreihungsmechanismus ferner so gestaltet ist, dass er einen Übertragungsanteil für einen Datenfluss für eine Verbindung aus der Vielzahl von Verbindungen so festlegt (238), dass er ein Mindestwert des Gesamtübertragungsanteils und eines Differenzübertragungsanteils ist, wobei der Differenzübertragungsanteil in der Lage ist, den Datenfluss auf der Grundlage des kleinstmöglichen Datenflusses oder des größtmöglichen Datenflusses linear zu erhöhen, wenn überschüssige Bandbreite vorhanden ist und wenn der Datenfluss für die Verbindung aus der Vielzahl von Verbindungen unter dem größtmöglichen Datenfluss für die Verbindung liegt, sowie in der Lage ist, den Datenfluss für die Verbindung aus der Vielzahl von Verbindungen auf der Grundlage des kleinstmöglichen Datenflusses oder des größtmöglichen Datenflusses exponentiell zu senken, wenn keine überschüssige Bandbreite vorhanden ist und der Durchfluss größer als der kleinstmögliche Durchfluss für die Verbindung ist, so dass der Datenverkehr durch die Warteschlange stabil ist, und wobei der Einreihungsmechanismus fern so gestaltet ist, dass er die Übertragung von Datenverkehr an die Warteschlange auf der Grundlage des Übertragungsanteils steuert (240); und weiter Folgendes umfasst:

eine Zeitsteuerungseinheit, um Datenverkehr von der Warteschlange zu steuern.

**9.** Computerlesbares Medium, das ein computerausfiihrbares Programm beinhaltet, welches Befehle umfasst für

(a) das Ermitteln (92) eines Warteschlangenfiillstandes für eine Warteschlange, die von einer Vielzahl von Datenpaketen in einem Computernetzwerk durchlaufen wird;
**dadurch gekennzeichnet, dass** das Verfahren weiter die folgenden Schritte umfasst:
(b) Ermitteln (92) einer angebotenen Rate der Vielzahl von Datenpaketen an die Warteschlange; und
(c) Steuern (94, 96) eines Übertragungsanteils der Vielzahl von Datenpaketen an die Warteschlange auf der Grundlage des Warteschlangenfüllstandes und der angebotenen Rate, wobei der Übertragungsanteil und der Warteschlangenfiillstand kritisch gedämpft (112, 152) werden, wenn der Warteschlangenfiillstand zwischen mindestens einem ersten Warteschlangenfüllstand und einem zweiten Warteschlangenfüllstand liegt, wobei die Änderung des Übertragungsanteils hinsichtlich der Zeit so festgelegt wird, dass sie gleich einem erstem Betrag, multipliziert mit einem zweiten Betrag ist, wobei der erste Betrag abhängig von der Zeit ist, wobei der zweite Betrag eine erste Konstante, minus einer zweiten Konstante, multipliziert mit dem Übertragungsanteil, minus dem Warteschlangenfiillstand, dividiert durch einen höchstmöglichen Warteschlangenfüllstand ist.

**10.** Computerlesbares Medium nach Anspruch 9, das ferner Befehle für (d) das Ermitteln (124) eines virtuellen höchstmöglichen Warteschlangenfiillstandes auf der Grundlage des Warteschlangenfüllstandes und des höchstmöglichen Warteschlangenfüllstandes umfasst und wobei der Befehl für das Steuern des Übertragungsanteils ferner auf dem Warteschlangenfüllstand, der angebotenen Rate und dem virtuellen höchstmöglichen Warteschlangenfiillstand beruht.

**11.** Computerlesbares Medium nach Anspruch 9, das weiter Befehle umfasst, um

(d) zu gestatten, dass ein kleinstmöglicher Datenfluss und ein größtmöglicher Datenfluss für jede Verbindung aus der Vielzahl von Verbindungen festgelegt (172) werden, welche die Warteschlange nutzen;
(e) zu ermitteln (178), ob überschüssige Bandbreite für die Warteschlange vorhanden ist; und
(f) einen Datenfluss für eine Verbindung aus der Vielzahl von Verbindungen auf der Grundlage des kleinstmöglichen Datenflusses oder des größtmöglichen Datenflusses linear zu erhöhen (184), wenn überschüssige Bandbreite vorhanden ist und wenn der Datenfluss für die Verbindung aus der Vielzahl von Verbindung geringer als der größtmögliche Datenfluss für die Verbindung ist, oder den Datenfluss für die Verbindung aus der Vielzahl von Verbindungen auf der Grundlage des kleinstmöglichen Datenflusses oder des größtmöglichen Datenflusses exponentiell abzusenken (180), wenn keine überschüssige Bandbreite vorhanden ist und der Datenfluss größer als der kleinstmögliche Datenfluss für die Verbindung ist, so dass der Datenverkehr durch die Warteschlange stabil ist.

**12.** Computerlesbares Medium nach Anspruch 11, wobei die Befehle für das Steuern des Übertragungsanteils (c) eine Gesamtübertragungsfunktion steuern und weiterhin Befehle umfassen, um:

(g) zu gestatten, dass ein kleinstmöglicher Datenfluss und ein größtmöglicher Datenfluss für jede Verbindung aus der Vielzahl von Verbindungen festgelegt werden;
(h) zu ermitteln, ob überschüssige Bandbreite für die Warteschlange vorhanden ist;
(i) einen Warteschlangenfiillstand für die Warteschlange zu ermitteln;
(j) eine angebotene Rate der Vielzahl von Datenpaketen an die Warteschlange zu ermitteln;
(k) einen Gesamtübertragungsanteil der Vielzahl von Datenpaketen an die Warteschlange auf der Grundlage des Warteschlangenfiillstandes und der angebotenen Rate zu steuern, so dass der Gesamtübertragungsanteil und der Warteschlangenfiillstand kritisch gedämpft werden, wenn der Warteschlangenfiillstand zwischen mindestens einem ersten Warteschlangenfiillstand und einem zweiten Warteschlangenfiillstand liegt;
(l) einen Übertragungsanteil für einen Durchfluss für eine Verbindung aus der Vielzahl von Verbindungen als einen Mindestwert des Gesamtübertragungsanteils und eines Differenzübertragungsanteils festzulegen (238), wobei der Differenzübertragungsanteil in der Lage ist, den Datenfluss auf der Grundlage des kleinstmöglichen Datenflusses oder des größtmöglichen Datenflusses linear zu erhöhen, wenn überschüssige Bandbreite vorhanden ist und wenn der Datenfluss für die Verbindung aus der Vielzahl von Verbindungen geringer als der größtmögliche Datenfluss für die Verbindung liegt, sowie in der Lage ist, den Datenfluss für die Verbindung aus der Vielzahl von Verbindungen auf der Grundlage des kleinstmöglichen Datenflusses oder des größtmöglichen Datenflusses exponentiell abzusenken, wenn keine überschüssige Bandbreite vorhanden ist und der Datenfluss größer als der kleinstmögliche Datenfluss für die Verbindung ist, so dass der Datenverkehr durch die Warteschlange stabil ist;
(m) die Übertragung von Datenverkehr an die Warteschlange auf der Grundlage des Übertragungsanteils zu steuern (240); und
(n) eine Zeitsteuerungseinheit zu nutzen (242), um Datenverkehr von der Warteschlange zu steuern.

**Revendications**

1. Procédé, comprenant les étapes consistant à :

   (a) réguler le flux d'une pluralité de paquets se déplaçant dans une file d'attente dans un réseau informatique ,
   (b) déterminer (92) un niveau de file d'attente pour la file d'attente ;
   **caractérisé en ce que** le procédé comprend en outre les étapes consistant à :
   (c) déterminer (92) un débit offert de la pluralité de paquets à la file d'attente ; et
   (d) réguler (94, 96) une fraction de transmission de la pluralité de paquets à la file d'attente, d'après le niveau de file d'attente et le débit offert, la fraction de transmission et le niveau de file d'attente étant soumis à un amortissement critique (112, 152) si le niveau de file d'attente est situé entre au moins un premier niveau de file d'attente et un deuxième niveau de file d'attente, le changement intervenant dans la fraction de transmission par rapport au temps étant fixé comme étant égal à une première quantité, multipliée par une deuxième quantité, la première quantité dépendant du temps, la deuxième quantité étant une première constante, moins une deuxième constante, multipliée par la fraction de transmission, moins le niveau de file d'attente, divisé par un niveau de file d'attente maximum possible.

2. Procédé selon la revendication 1, dans lequel la file d'attente présente un niveau de file d'attente maximal possible et comprenant en outre les étapes consistant à :

   (e) déterminer (124) un niveau de file d'attente maximal virtuel, d'après le niveau de file d'attente déterminé et le niveau de file d'attente maximal.

3. Procédé selon la revendication 1, comprenant en outre :

   (e) la définition d'une pluralité de canaux qui utilisent la file d'attente ;
   (f) la fixation (172) d'un flux minimal et d'un flux maximal pour chacun de la pluralité de canaux ;
   (g) la détermination (178) de l'existence d'un excès de largeur de bande pour la file d'attente ; et
   (h) l'augmentation linéaire (184) d'un flux pour un canal, d'après l'un du flux minimal et du flux maximal, si un excès de largeur de bande existe et si le flux pour le canal de la pluralité de canaux est inférieur au flux maximal pour le canal ; ou
   (i) la diminution exponentielle (180) du flux pour le canal, d'après l'un du flux minimal et du flux maximal, si aucun excès de largeur de bande n'existe et si le flux est supérieur au flux minimal pour le canal, de manière que le trafic se faisant par la file d'attente soit stable.

4. Procédé selon la revendication 3, dans lequel ladite étape (d) de contrôle d'une fraction de transmission contrôle une fraction de transmission globale et comprenant les étapes supplémentaires consistant à :

   (j) fixer (238) une fraction de transmission, pour un flux pour un canal de la pluralité de canaux, comme étant un minimum de la fraction de transmission globale et une fraction de transmission différentielle, la fraction de transmission différentielle étant capable d'augmenter de façon linéaire le flux, d'après le flux minimal ou le flux maximal, s'il existe un excès de largeur de bande et si le flux pour le canal de la pluralité de canaux est inférieur au flux maximal pour le canal, et capable de diminuer de façon exponentielle le flux pour le canal de la pluralité de canaux, d'après le flux minimal ou le flux maximal, s'il n'existe aucun excès de largeur de bande et si le flux est supérieur au flux minimal pour le canal, de manière que le trafic passant par la file d'attente soit stable ;

(k) réguler (240) la transmission de trafic vers la file d'attente, d'après la fraction de transmission ; et

(l) utiliser (242) un programmateur pour réguler le trafic venant de la file d'attente.

5. Appareil, comprenant :

une file d'attente, pour stocker une partie d'un flux d'une pluralité de paquets se déplaçant dans un réseau informatique ;

**caractérisé en ce que** l'appareil comprend en outre :

un mécanisme de mise en file d'attente, couplé à la file d'attente, pour recevoir un débit offert de la pluralité de paquets et pour réguler (94, 96) une fraction de transmission de la pluralité de paquets à la file d'attente, le débit de transmission étant régulé d'après un niveau de file d'attente pour la file d'attente et le débit offert, de manière que la fraction de transmission et le niveau de file d'attente soient l'objet d'un amortissement critique (112, 152) si le niveau de file d'attente est situé entre au moins un premier niveau de file d'attente et un deuxième niveau de file d'attente, le changement intervenant dans la fraction de transmission par rapport au temps étant fixé comme étant égal à une première quantité, multipliée par une deuxième quantité, la première quantité dépendant du temps, la deuxième quantité étant une première constante, moins une deuxième constante, multipliée par la fraction de transmission, moins le niveau de file d'attente, divisé par un niveau de file d'attente maximum possible.

6. Appareil selon la revendication 5, dans lequel ledit mécanisme de mise en file d'attente est adapté pour déterminer (124) un niveau de file d'attente maximal virtuel, d'après le niveau de file d'attente déterminé et le niveau de file d'attente maximal, le mécanisme de mise en file d'attente est adapté pour réguler le débit de transmission, d'après le niveau de file d'attente pour la file d'attente, le débit offert et le niveau de file d'attente maximal virtuel.

7. Appareil selon la revendication 5, dans lequel la file d'attente est utilisée par une pluralité de canaux par lesquels du trafic est transmis, et en outre dans lequel le mécanisme de mise en file d'attente est adapté pour utiliser un flux minimal et un flux maximal, fixés (172) pour chacun delà pluralité de canaux par un utilisateur, le mécanisme de mise en file d'attente est adapté pour déterminer (178) si l'excès de largeur de bande existe pour la file d'attente et (a) effectuer l'augmentation linéaire (184) d'un flux pour un canal de la pluralité de canaux, d'après l'un du flux minimal ou du flux maximal, si un excès de largeur de bande existe et si le flux pour un canal de la pluralité de canaux est inférieur au flux maximal pour le canal, ou (b) effectuer la diminution exponentielle (180) du flux pour le canal de la pluralité de canaux, d'après l'un du flux minimal et du flux maximal, si aucun excès de largeur de bande n'existe et si le flux est supérieur au flux minimal pour le canal, de manière que le trafic se faisant par la file d'attente soit stable.

8. Appareil selon la revendication 7, dans lequel le mécanisme de mise en file d'attente est adapté pour réguler une fraction de transmission globale de la pluralité de paquets allant à la file d'attente, d'après le niveau de file d'attente et le débit offert, de manière que la fraction de transmission globale et le niveau de file d'attente soient soumis à un amortissement critique si le niveau de file d'attente est situé entre au moins un premier niveau de file d'attente et un deuxième niveau de file d'attente, et le mécanisme de mise en file d'attente est également adapté pour fixer (238) une fraction de transmission, pour un flux pour un canal de la pluralité de canaux, comme étant un minimum de la fraction de transmission globale et une fraction de transmission différentielle, la fraction de transmission différentielle étant capable d'augmenter de façon linéaire le flux, d'après le flux minimal ou le flux maximal, s'il existe un excès de largeur de bande et si le flux pour le canal de la pluralité de canaux est inférieur au flux maximal pour le canal, et capable de diminuer de façon exponentielle le flux pour le canal de la pluralité de canaux, d'après le flux minimal ou le flux maximal, s'il n'existe aucun excès de largeur de bande et si le flux est supérieur au flux minimal pour le canal, de manière que le trafic passant par la file d'attente soit stable, et le mécanisme de mise en file d'attente est également adapté pour réguler (240) la transmission de trafic vers la file d'attente, d'après la fraction de transmission ; et comprenant en outre un programmateur, pour réguler le trafic venant de la file d'attente.

9. Support lisible par ordinateur, contenant un programme exécutable par ordinateur, comprenant des instructions pour :

(a) déterminer (92) un niveau de file d'attente pour une file d'attente par laquelle passe une pluralité de paquets s'écoulant dans un réseau informatique ;

**caractérisé en ce que** le procédé comprend en outre les étapes consistant à :

(b) déterminer (92) un débit offert de la pluralité de paquets à la file d'attente ; et

(c) réguler (94, 96) une fraction de transmission de la pluralité de paquets à la file d'attente, d'après le niveau de file d'attente et le débit offert, la fraction de transmission et le niveau de file d'attente étant soumis à un amortissement critique (112, 152) si le niveau de file d'attente est situé entre au moins un premier niveau de file d'attente et un deuxième niveau de file d'attente, le changement intervenant dans la fraction de transmission par rapport au temps étant fixé comme étant égal à une première quantité, multipliée par une deuxième quantité, la première quantité dépendant du temps, la deuxième quantité étant une première constante, moins une deuxième constante, multipliée par la fraction de transmission, moins le niveau de file d'attente, divisé par un niveau de file d'attente maximum possible.

10. Support lisible par ordinateur selon la revendication 9, comprenant en outre des instructions, pour (e) déterminer (124) un niveau de file d'attente maximal virtuel, d'après le niveau de file d'attente et le niveau de file d'attente maximal, et dans lequel en outre l'instruction régulant la fraction de transmission est basée sur le niveau de file d'attente, le débit offert, et le niveau de file d'attente maximal virtuel.

11. Support lisible par ordinateur selon la revendication 9, comprenant en outre des instructions pour :

(d) permettre la fixation (172) d'un flux minimal et d'un flux maximal pour chacun de la pluralité de canaux utilisant la file d'attente ;

(e) la détermination (178) de l'existence d'un excès de largeur de bande pour la file d'attente ; et

(f) l'augmentation linéaire (184) d'un flux pour un canal de la pluralité de canaux, d'après l'un du flux minimal ou du flux maximal, si un excès de largeur de bande existe et si le flux pour le canal de la pluralité de canaux est inférieur au flux maximal pour le canal ; ou la diminution exponentielle (180) du flux pour le canal de la pluralité de canaux, d'après l'un du flux minimal ou du flux maximal, si aucun excès de largeur de bande n'existe et si le flux est supérieur au flux minimal pour le canal, de manière que le trafic se faisant par la file d'attente soit stable.

12. Support lisible par ordinateur selon la revendication 11, dans lequel les instructions de régulation de fraction de transmission (c) commandent une fonction de transmission globale et comprenant en outre des instruction pour :

(g) permettre de fixer un flux minimal et un flux maximal pour chacun de la pluralité de canaux ;

(h) déterminer s'il existe un excès de largeur de bande pour la file d'attente ;

(i) déterminer un niveau de file d'attente pour la file d'attente ;

(j) déterminer un débit offert de la pluralité de paquets à la file d'attente ;

(k) réguler une fraction de transmission de la pluralité de paquets à la file d'attente, d'après le niveau de file d'attente et le débit offert, de manière que la fraction de transmission globale et le niveau de file d'attente soient soumis à un amortissement critique si le niveau de file d'attente est situé entre au moins un premier niveau de file d'attente et un deuxième niveau de file d'attente ;

(l) fixer une fraction de transmission, pour un flux pour un canal de la pluralité de canaux, comme étant un minimum de la fraction de transmission globale et une fraction de transmission différentielle, la fraction de transmission différentielle étant capable d'augmenter de façon linéaire le flux, d'après le flux minimal ou le flux maximal, s'il existe un excès de largeur de bande et si le flux pour le canal de la pluralité de canaux est inférieur au flux maximal pour le canal, et capable de diminuer de façon exponentielle le flux pour le canal de la pluralité de canaux, d'après le flux minimal ou le flux maximal, s'il n'existe aucun excès de largeur de bande et si le flux est supérieur au flux minimal pour le canal, de manière que le trafic passant par la file d'attente soit stable ;

(m) réguler (240) la transmission de trafic vers la file d'attente, d'après la fraction de transmission ; et

(n) utiliser (242) un programmateur pour réguler le trafic venant de la file d'attente.

## 10

Switch Fabric — 3

7

8

9

2

Network Processor

2

Network Processor

2

Network Processor

Ports

Ports

Ports

4

4

4

To/From Hosts

To/From Hosts

To/From Hosts

Prior Art

**Fig 1**

11

13

17

2

12

Ingress Enque/ Dequeue/ Scheduling Logic

Ingress Switch Interface

Egress Switch Interface

Egress Enque/ Dequeue/ Scheduling Logic

16

Embedded Processor Complex

Ingress PMM

Egress PMM

14

15

Prior Art

**Fig 2**

<u>10</u>

Prior Art

Fig 3

<u>40</u>

```
Determine Queue Level          41
    for Previous Epoch
```

```
        Queue Level              42
      Above Minimum?          No
```

```
                                        43
                          Set Discard Fraction = 0
                          Transmission Fraction = 1
```

Yes

```
  44
        Queue Level
      Above Maximum?        Yes
```

```
                                        45
                          Set Discard Fraction = 1
                          Transmission Fraction = 0
```

No

```
  46
Set Discard Fraction Proportional to Queue
Level/Max Queue Level or Other Linear
    Function of Queue Level
```

```
  47
Using Discard Fraction or Transmission
  Fraction, Randomly Discard Packets
```

```
  48
Yes        Epoch Ended?            No
```

Prior Art

**Fig 4**

## 50

Determine Queue Level, Offered Rate and Transmittion Fraction for Previous Epoch — 52

Packet Loss/High Queue Level? — 54

Yes → Increase Discard Fraction by Set Amount — 56

No

58 — Queue Level Low/ Low Traffic?

Yes → Decrease Discard Fraction By Set Amount — 60

No

62 — Using Discard Fraction or Transmission Fraction, Randomly Discard Packets

64 — Epoch Ended?

Yes ← | → No

Prior Art

## Fig 5

<u>70</u>

Set Queue Level and
Weights — 72

↓

Observe Queue Levels — 74

↓

Change Flows Based on
Queue Levels and Weights — 76

↓

Transmit/Drop Packets
Based On Flows — 78

↓

80 — Desired Levels of
Service Obtained?

No ←

Yes

↓

Done

Prior Art

Fig 6

**90**

Determined Queue Level and
Offered Rate for Previous Epoch — 92

Control Transmission Fraction,
Based on Queue Level and Offered
Rate, So That Critical Damping
Provided — 94

Transmit/Discard Traffic Based on the
Transmission Fraction For the Epoch — 96

Fig 7

**100**

Determine Queue Level and Offered Rate for Previous Epoch, Have Transmission Fraction for Previous Epoch Available ⟋— 102

Queue Level Above Minimum? ⟋— 104 — No

Set Transmission Fraction = 1 (Discard Fraction = 0) ⟋— 106

Yes

108 ⟍ Queue Level Above Maximum? — Yes

Set Transmission **Fraction**= 0 (Discard Fraction = 1) ⟋— 110

No

112 ⟍ Set Transmission Fraction For Critical Damping Based on Queue Level, Offered Rate and Transmission Fraction of Previous Epoch

114 ⟍ Using Transmission Fraction, Discard Packets

116 ⟍ — Yes — Epoch Ended? — No

Fig 8

**120**

Determined Queue Level and
Offered Rate for Previous Epoch — 122

↓

Determine Virtual Maximum Queue
Level Based on Queue Level — 124

↓

Control Transmission Fraction, Based
on Queue Level, Offered Rate and
Virtual Maximum Queue Level — 126

↓

Transmit/Discard Traffic Based on the
Transmission Fraction For the Epoch — 128

**Fig 9**

**130**

Queue Level
Above Maximum
Threshold ? — 132

No → Set Multiplier to
Exponentially Approach
a First Quantity — 134

Yes ↓

136 — Set Multiplier to
Exponentially Approach
a Second Quantity

**Fig 10**

**140**

Determine Queue Level and Offered Rate for Previous Epoch, Have Transmission Fraction and Multiplier for Previous Epoch — 142

144

Queue Level Above Min? — No — 146

Set Transmission Fraction = 1

154 —

Set Multiplier Using Method **130**

Yes

148 —

Queue Level Above Max? — Yes — 150

Set Transmission Fraction At Or Near Zero

No

Set Transmission Fraction Based on Previous Transmission Fraction, Queue Level, Offered Rate, Previous Multiplier and Maximum Queue Level — 152

156 —

Using Transmission Fraction, Discard Packets

158 —

Yes — Epoch Ended? — No

**Fig 11**

<u>160</u>

Fig 12

_170_

Compute Constants for Each Pipe — 172

Allow Traffic to Flow Through Pipes — 174

Ensure B, E, Queue Level and, Preferably, Flows Available — 176

188 —

Set T = Previous Transmission Fraction - Constant Multiplied by Previous Flow if B = 0 Otherwise Set T = Previous Transmission Fraction + Constant Multiplied by E

Excess Bandwidth? — 178

Yes — 184

Set Instantaneous Excess Bandwidth Signal = 1

No

180 —

Set Instantanous Excess Bandwidth Signal = 0

186

Set Excess Bandwidth Signal = Exponentially Weighted Average of Instantaneous Excess Bandwidth Signal

182 —

Set Excess Bandwidth Signal = Fraction of Excess Bandwidth Signal

190

Using Transmission Fraction, Discard Packets

192 —

Yes — Epoch Ended? — No

Fig 13

## 200

Compute Constants for Each Pipe — 202

Determine Queue Level, Flows and Other Required Information Needed — 204

214 —

Set Ti(t + Dt) = Const if Sum fi(t) >= Const.;
min(1, Ti(t) + Const) if fi <= fimin;
Const. *Ti(t) if fi(t) > fimax;
Otherwise min{Tglobal(t), Ti(t) + Ci*E(t)} if B(t) = 1 or min{Tglobal(t), Ti(t) - Di*fi(t)} if B(t) = 0

Excess Bandwidth? — 206

Yes — 208

Set Instantaneous Excess Bandwidth Signal = 1

No

Set Instantanous Excess Bandwidth Signal = 0 — 210

Set Excess Bandwidth Signal = Exponentially Weighted Average of Instantaneous Excess Bandwidth Signal — 212

Using Transmission Fraction, Discard Packets — 216

218 —

Yes — Epoch Ended? — No

Fig 14

<u>220</u>

```
┌─────────────────────────────────┐
│  Allow User to Set Minimum and  │──── 222
│        Maximum Flows            │
└─────────────────────────────────┘
                │
                ▼
┌─────────────────────────────────┐
│    Allow Flows to be Controlled │──── 224
└─────────────────────────────────┘
                │
                ▼
┌─────────────────────────────────┐
│      Determine Queue Level for  │──── 226
│          Previous Epoch         │
└─────────────────────────────────┘
                │
                ▼
┌─────────────────────────────────┐
│     Determine Offered Rate for  │──── 228
│          Previous Epoch         │
└─────────────────────────────────┘
                │
                ▼
┌──────────────────────────────────────┐
│  Control Global Transmission Fraction,│──── 230
│ Based on Queue Level and Offered Rate,│
│        For Critical Damping           │
└──────────────────────────────────────┘
                │
                ▼
              ( A )
```

Fig 15

A

232

Excess
Bandwidth?

234 ——— Yes

Set Differential
Transmission Fraction
to Linearly Increase
Flow for Each Pipe

No

236

Set Differential
Transmission Fraction to
Exponentially Decrease
Flow for Each Pipe

238

Transmission Fraction = Min(Global
Transmission Fracton, Differential
Transmission Fraction)

240

Control Traffic to Queue Using
Transmission Fraction

242

Use Scheduler to Remove
Individual Packets from Queue

Fig 16

**250**

**252**

Queue Level
Above Minimum? — No → **254**

Set Global Transmission
Fraction = 1
(Discard Fraction = 0)

Yes

**256** → Queue Level
Above Maximum? — Yes → **258**

Set Global Transmission
**Fraction** = 0
(Discard Fraction = 1)

No

**260** →

Set Global Transmission Fraction For Critical
Damping Based on Queue Level, Offered Rate
and Transmission Fraction of Previous Epoch

Go to Next Step in
Method.

Fig 17

## 270

Compute Constants for Each Pipe — 272

284 —

Set Differential Transmission Fraction = Previous Differential Transmission Fraction - Constant Multiplied by Previous Flow if B = 0 Otherwise Set Differential Transmission Fraction = Previous Differential Transmission Fraction + Constant Multiplied by E

— 274

Excess Bandwidth? — Yes

No

280 —

Set Instantanous Excess Bandwidth Signal = 0

282 —

Set Excess Bandwidth Value = Fraction of Excess Bandwidth Signal

— 276

Set Instantaneous Excess Bandwidth Signal = 1

— 278

Set Excess Bandwidth Value = Exponentially Weighted Average of Instantaneous Excess Bandwidth Signal

Go to Next Step in Method

Fig 18

<u>290</u> ⌐ 292

Highest Priority Calendar

Second Highest Priority
Calendar — 294

Third Highest Priority
Calendar — 296

Weighted Fair
Queuing Ring — 298

Fig 19

<u>300</u>

```
┌─────────────────────────┐
│  Determine              │─── 302
│ Characteristics of Packet│
│  to be Scheduled        │
└─────────────────────────┘
           │
           ▼
┌─────────────────────────┐─── 304
│ Determine Characteristics│
│ of Previous Packet from │
│      Same Pipe          │
└─────────────────────────┘
           │
           ▼
      ╱──────────╲ ─── 306
     ╱            ╲
    ╱ Highest Priority? ╲──── Yes ───┐
     ╲            ╱                   │
      ╲──────────╱                    ▼
           │                  ┌──────────────────┐─── 308
          No                  │ Place Packet in First│
           │                  │    Calendar      │
           ▼                  └──────────────────┘
      ╱──────────╲ ─── 310
     ╱   Second   ╲
    ╱ Highest Priority? ╲──── No ───┐
     ╲            ╱                  │
      ╲──────────╱                   ▼
           │               ╱──────────╲ ─── 314
          Yes             ╱            ╲
           │             ╱ Third Highest ╲─── No ──┐ ─── 318
312 ──┐    ▼            ╲   Priority?  ╱            ▼
┌─────────────┐          ╲            ╱     ┌──────────────┐
│ Place Packet │          ╲──────────╱      │ Place Packet in│
│ in Second   │               │             │ Weighted Fair │
│  Calendar   │              Yes            │ Queuing Ring  │
└─────────────┘               │             └──────────────┘
                              ▼
                    ┌──────────────┐─── 316
                    │ Place Packet in│
                    │ Third Calendar│
                    └──────────────┘
```

Fig 20

**320**

**322**

Position in First
Calendar Empty?

No → **324**

Send Packet in First
Calendar's Current
Position

Yes

**326**

Position in
Second Calendar
Empty?

No → **328**

Send Packet in Second
Calendar's Current
Position

Yes

**330**

Position in
Third Calendar
Empty?

Yes → **334**

Position in
Ring Empty?

No → **336**

Send Packets in
Positions in Ring
Until Time to
Advance
Calendar(s)

No

**332**

Send Packet in
Third Calendar's
Current Position

Yes

Next Position = Current
Position in Calendar(s) — **338**

**Fig 21**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Ohsaki H et al.** *Analysis of rate-based congestion control algorithm for ATM networks. part 2: initial transient state analysts,* 1095-1101